# EUROPEAN PATENT APPLICATION

(11) **EP 4 250 803 A1**
(43) Date of publication of application: **27.09.2023**
(21) Application number: 22172335.6
(22) Date of filing: 09.05.2022
(51) Int. Cl.: H04W 24/02, H04W 36/00

(54) **METHOD AND SYSTEM OF MANAGING PLURALITY OF NEIGHBOR CELLS OF A TARGET CELL**

(30) Priority: 23.03.2022 US 202217702497
(71) Applicant: Sterlite Technologies Limited, Haryana 122002 (IN)
(72) Inventor: Shankaranarayanan, N.K., 122002 Gurugram (IN); Puthenpura, Sarat, 122002 Gurugram (IN); Parekh, Shyam, Orinda, 94563 (US); Tang, Kevin, Dublin, 94568 (US); Kumar, Abhishek, 122002 Gurugram (IN)
(74) Representative: Sach, Greg Robert

(57) **Abstract**

The present disclosure relates to a method and a system of managing a plurality of neighbor cells of each target cell. The method includes capturing and reporting, by a central unit (CU) (512) associated with each target cell, a radio signal quality associated with each of the plurality of neighbor cells (354b, 354c, 354d) of a target cell (354a) based on signal strength measurements reported by a plurality of user equipments (UEs) (324a1,324a2, 324a3) to the target cell, ranking and labeling the plurality of neighbor cells based on the radio signal quality associated with each of the plurality of neighbor cells and taking and managing an action based on the ranking and labeling. Particularly, the action is associated with the plurality of neighbor cells.

## Description

### TECHNICAL FIELD

Embodiments of the present disclosure relate to the field of wireless communication networks, and more particularly, relates to a method and a system for managing a plurality of neighbor cells of a target cell in an O-RAN (Open-Radio Access Network).

### Background Art

Wireless communication systems are rapidly growing in usage. In recent years, wireless devices such as smartphones and tablet computers have become increasingly sophisticated. In addition to supporting telephone calls, many mobile devices now provide access to the internet, email, text messaging, and navigation using the global positioning system (GPS), and are capable of operating sophisticated applications that utilize these functionalities.

For the operation of cellular wireless networks, neighbor relations are critical in particular. The quality of the neighbor relations directly affects handoff success, throughput and overall performance of the cellular wireless networks. Manually provisioning and managing neighbor cells is a challenging task and it becomes more difficult as new mobile technologies are being rolled out. In the same context, Automatic Neighbor Relations (ANR) area, SON (Self-Organizing Network) function, and an ANR is introduced to eliminate the need to manually manage neighbor relations (NRs) in the cellular wireless networks. Further, the ANR is used to automatically populate a neighbor relation table (NRT). With fifth generation (5G) and disaggregation of radio access networks (RAN), the problem becomes complex and the ANR solution needs to be modified to exploit the flexibility an Open Radio Access Network (O-RAN) architecture provides. This can enhance the ability of the ANR solution to optimize the handoff (handover) success, the throughput and overall performance of the cellular wireless networks.

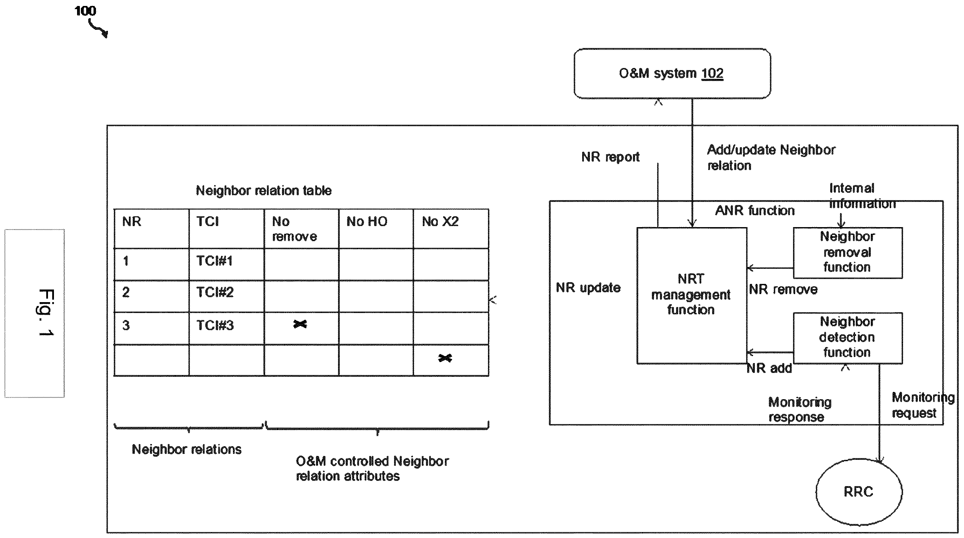

Fig.1 is an exemplary illustration (100) describing an LTE PCI planning for poorly performing neighbors (or noisy neighbors) in accordance with the prior art. In particular, the ANR function resides in an eNB (eNodeB or Evolved Node B) and manages a conceptual Neighbor Relation Table (NRT), where a neighbor detection function determines new neighbors and adds them to the NRT which is located within the ANR. The ANR also contains a neighbor removal function which removes poorly performing neighbors from the NRT. Moreover, the neighbor detection function and the neighbor removal function are implementation specific. Further, for each cell that the eNB has, the eNB keeps an NRT. For each NR, the NRT contains the target cell identifier (TCI), where the TCI identifies a target cell.

In an exemplary example, for an Evolved UMTS Terrestrial Radio Access Network (E-UTRAN), the TCI corresponds to the E-UTRAN Cell Global Identifier (ECGI) and Physical Cell Identifier (PCI) of the target cell. In particular, the ANR function relies on cells broadcasting their identity on a global level. Moreover, the ECGI allows an Operations & Maintenance (O&M) system (102) to manage the NRT. Furthermore, the O&M system can add and delete NRs. Further, the O&M system (102) can also change attributes of the NRT. The O&M system (102) is informed about changes in the NRT.

With respect to Intra-RAT/frequency ANR, the gNB or eNB serving cell with the ANR function and it instructs each UE to perform measurements on neighbor cells as a part of the normal call procedure. Particularly, the gNB/eNB may use different policies for instructing the UE to do measurements, and when to report them to the gNB/eNB. When the UE discovers a new cell's ECGI (E-UTRAN Cell Global Identifier) or NR Cell Global Identifier (NCGI), the UE reports the detected ECGI/NCGI(aka "CGI") to the serving cell gNB/eNB. Moreover, the UE reports tracking area codes and all Public Land Mobile Network identifiers (PLMN IDs) that have been detected. The gNB or eNB adds this neighbor relation to the NRT.

With respect to Inter-RAT/Inter-frequency ANR, the gNB or eNB serving cell with the ANR function can instruct the UE to perform measurements and detect cells on other RATs/frequencies during connected mode. Particularly, the gNB or eNB may use different policies for instructing the UE to do measurements, and when to report them to the gNB or eNB.

Further, the UE reports the PCI of the detected cells in the target RATs/frequencies. When the gNB or eNB receives the UE reports containing PCIs of cell(s), the gNB or eNB may instruct the UE to read the CGI (cell global identifier) and an RAC (routing area code) of the detected neighbor cell in case of GERAN (GSM EDGE Radio Access Network) detected cells and the CGI, a location area code (LAC) and, the Routing Area Code (RAC) in case of UTRAN detected cells. For the inter-frequency case, the eNB/gNB may instruct the UE to read the ECGI/NCGI, TAC and all available PLMN ID(s) of the inter-frequency detected cell. The eNB/gNB updates its inter-RAT/inter-frequency neighbor relation table after receiving relevant information from the UE.

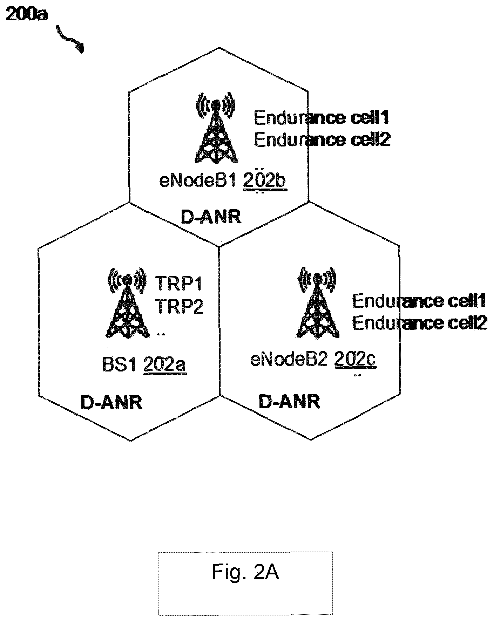

Fig. 2A is another exemplary illustration (200a) describing the neighbor relations detected in a distributed approach, in accordance with the prior art. The base station (BS)(202a) that adds/deletes its neighbors automatically monitoring signaling messages over interfacesUu and X2. Particularly, in a distributed ANR (D-ANR), the neighbor detection process is typically fast as it is deployed close to the radio network. However, the process influences fewer cells per-algorithm because a D-ANR module works per BS basis.

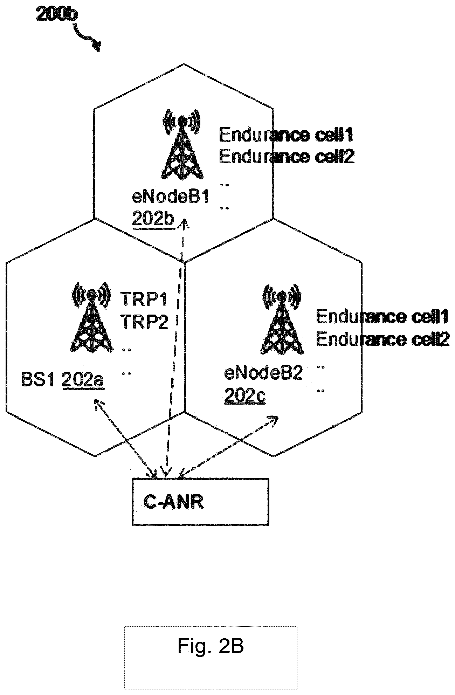

Fig. 2B is yet another exemplary illustration (200b) describing the neighbor relations detected in a centralized approach, in accordance with the prior art. The centralized ANR (C-ANR) determines multiple cells operating under different BSs together. Particularly, the C-ANR can jointly optimize NRTs of multiple BSs. Moreover, the C-ANR adds the NRs to cells based on centralized configuration data and key performance indicators (KPIs). Further, the ECGI is acquired from a centralized database, instead of UE measurements. However, the C-ANR may detect potential neighbors slower when compared to the D-ANR since it does not have real-time intra/inter RAT and intra/inter frequency NRTupdate functionalities that the D-ANR possesses.

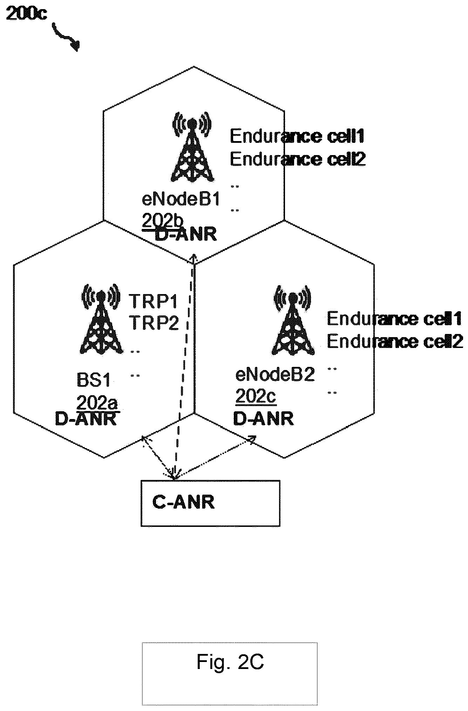

Fig. 2C is yet another exemplary illustration (200c) describing the neighbor relations detected in a hybrid approach, in accordance with the prior art. The hybrid-ANR (H-ANR) optimum comprising the D-ANR and the C-ANR. In particular, the operations of the H-ANR are complex. The current scope is not sufficient to comply with 5G requirements, especially with dynamic HetNet optimization which strives for very low latency under high scalability.

US Patent Application No. US10827549B2 relates to facilitating automatic neighbor relationships. The disclosure relates to facilitating automatic neighbor relationships to support radio access networks for a 5G (virtualized or not), or other next generation network, air interface. In the disclosure, network virtualization and SDN can provide improved programmability, time to market, etc. 5G RAN can be decomposed and some of the RAN functions, such as the non-real time functions (more precisely the L3 and part of L2 functions for both control plane and user plane) can be centralized and virtualized (e.g., vCU), and the real time RAN functions can be distributed to or close to the cell sites (e.g., donor unit (DU)/radio unit (RU)). Moreover, this disclosure provides an enabler of 5G RAN, the 5G automatic neighbor relationship (ANR), to optimize the mobility management to select the best anchor cell (either LTE or 5G NB) while supporting various deployments and 5G virtualization.

US Patent Application No. US9294963B2 discloses a method that comprises, at the source eNB, maintaining a Neighbor Relation Table (NRT) identifying the connectivity of the source eNB to cells of its neighbor eNBs, this information including for each eNB cell an indication that the eNB cell is an open, closed or hybrid eNB cell and, for each closed and hybrid eNB cell, a Closed Subscriber Group, CSG, identity. The method further comprises determining that a handover of the UE is required and using the information stored in the NRT to identify closed and optionally hybrid eNBs cells to which the subscriber has access, selecting a target eNB cell from the available open eNBs cells and the identified closed and optionally hybrid eNBs cells, and performing handover of the subscriber from the source to the target eNB cell including establishing an X2 interface between the source and the target eNBs where no such interface exists a priori.

In accordance with the current 3GPP Long Term Evolution (LTE) specifications, the eNB can obtain knowledge about its connectivity to its neighbors by means of a Neighbor Relation Table (NRT) which it maintains. In particular, the NRT in the eNB can be configured either manually or via Operation and Maintenance (O&M) processes, or automatically via the Automatic Neighbor Relation (ANR) function which resides in the eNB.

A non-patent literature titled "Hybrid Automatic Neighbor Relations for 5G Wireless Networks" discloses a comprehensive hybrid ANR (H-ANR) architecture considering the requirements of 5G systems which will keep LTE-A at the core of wireless cellular network. In particular, the introduced architecture is also applicable to current networks and includes NR ranking, blacklisting and whitelisting functionalities which utilize an extensive set of universal performance criteria, configuration metrics, and measurements. Moreover, these functionalities are applicable to inter-vendor/heterogeneous network (HetNet) scenarios. Furthermore, D-ANR attributes of BSs are managed to optimize automatic intra-frequency neighbor detection processes. Further, eX2 blacklisting and whitelisting policy based on cell to cell or transmission/reception points (TRP) to TRP relations [16] between two BSs are also envisioned and introduced for 5G systems. Optimization of NRT which includes removal of poorly performing neighbors is conducted by ranking NRs with a universal ranking equation. New NRs are introduced utilizing historical performance of NRs and number of available vacancies.

While the prior arts cover various solutions for managing neighbor cells, these solutions are not effective, since the existing methods and systems have several drawbacks. Firstly, the Highly dynamic HetNet(heterogeneous network) environment used in the currently similar technologies demands very low latency and high quality neighbor relations with high scalability. Moreover, the existing solutions do not support high interoperability in a disaggregated multi-vendor environment and do not support policy-based features to reduce operational complexity. There is an urgent need for a technical solution that overcomes the above stated limitations in the prior arts. Thus, the present disclosure provides a method and a system for managing a plurality of neighbor cells of a target cell in an O-RAN (Open-Radio Access Network).

### SUMMARY OF THE DISCLOSURE

Embodiments of the present disclosure provide a method of managing a plurality of neighbor cells of each target cell in a radio access network.

According to first aspect, the method of managing a plurality of neighbor cells of each target cell in a radio access network includes the steps of capturing and reporting a radio signal quality associated with each of the plurality of neighbor cells of a target cell by a central unit (CU) associated with each target cell based on signal strength measurements reported by a plurality of user equipments (UEs) to the target cell and a handover performance between the target cell and each of the plurality of neighbor cells, ranking and labeling the plurality of neighbor cells based on the radio signal quality associated with each of the plurality of neighbor cells, and taking and managing an action based on the ranking and labeling, wherein the action is associated with the plurality of neighbor cells.

According to second aspect of the present disclosure the managing action includes adding a cell to the plurality of neighbor cells when the cell is identified as a good neighbor. Particularly, the good neighbor is determined based on at least one of a radio signal quality information, a radio signal quality threshold and priority of each of the plurality of neighbor cells.

In accordance with an embodiment of the present disclosure, the managing action includes rearranging priorities of each of the plurality of neighbor cells based on the ranking. The ranking of the plurality of neighbor cells includes assigning a rank to each of the plurality of neighbor cells based on calculation of the radio signal quality for each of the plurality of neighbor cells.

In accordance with an embodiment of the present disclosure, the managing action includes removing a cell for handover consideration from the plurality of neighbor cells when the cell is identified as a bad neighbor. In particular, the bad neighbor is so labeled based on at least one of a handover performance information derived from attempted handovers, a handover failure information, a handover successful information, an attempted handovers threshold, a handover success ratio, and a handover success ratio threshold.

According to third aspect of the present disclosure, the handover performance is defined by one or more of a number of attempted handovers between each of the plurality of neighbor cells and the target cell and a number of successful handover between each of the plurality of neighbor cells and the target cell.

According to fourth aspect of the present disclosure, system for managing a plurality of neighbor cells of each target cell is configured to capture radio signal quality measurements from a plurality of user equipments (UEs) associated with a target cell, report the radio signal quality measurements for all subscribed target cells toat least one xApp in connection with a Near-Real-Time Radio Access Network Intelligent Controller (Near-RTRIC) by the CU, rank the plurality of neighbor cells by the at least one xApp based on the radio signal quality measurements associated with each of the plurality of neighbor cells, capture a handover performance from each target cell, report the handover performance of all subscribed cells to at least one rApp in connection with a Non-Real-Time Radio Access Network Intelligent Controller (Non-RTRIC) within a Service Management and Orchestrator (SMO) by the CU, create a policy and send the policy by at least one rApp to at least one xApp in connection with the Near-RTRIC over an A1 interface, and take and manage an action based on the ranking and the policy by at least one xApp in connection with the Near-RTRIC.

According to fifth aspect of the present disclosure, the radio signal quality measurements are captured by a central unit (CU) associated with the target cell. Particularly, the radio signal quality measurements are associated with each of the plurality of neighbor cells. Moreover, the CU is in connection with the Near-RTRIC over an E2 interface. Furthermore, the handover performance is captured by the central unit (CU) associated with the target cell. And, the handover performance is associated with each of the plurality of neighbor cells of the target cell. Further, the CU is in connection with the SMO over an O1 interface. Additionally, the manage action is associated with the plurality of neighbor cells.

In accordance with an embodiment of the present disclosure, the manage action includes adding a cell to the plurality of neighbor cells when the cell is identified as a good neighbor. In particular, the good neighbor is determined based on at least one of a radio signal quality information, a radio signal quality threshold, priority of each of the plurality of neighbor cells.

In accordance with an embodiment of the present disclosure, the manage action includes rearranging priorities of each of the plurality of neighbor cells based on the ranking.

In accordance with an embodiment of the present disclosure, ranking of the plurality of neighbor cells includes assigning a rank to each of the plurality of neighbor cells based on calculation of the radio signal quality for each of the plurality of neighbor cells.

In accordance with an embodiment of the present disclosure, the manage action includes removing a cell from the plurality of neighbor cells when the cell is identified as a bad neighbor. In particular, the bad neighbor is so labeled based on at least one of a handover performance information derived from attempted handovers, a handover failure information, a handover successful information, an attempted handovers threshold, a handover success ratio, and a handover success ratio threshold.

In accordance with an embodiment of the present disclosure, the handover performance is defined by one or more of a number of attempted handovers between each of the plurality of neighbor cells and the target cell and a number of successful handovers between each of the plurality of neighbor cells and the target cell.

The foregoing objectives of the present disclosure are attained by employing a a system for managing a plurality of neighbor cells of a target cell in an O-RAN (Open-Radio Access Network) and a method thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig.1 is an exemplary illustration describing an LTE PCI planning for poorly performing neighbors (or noisy neighbors) in accordance with the prior art;
Fig. 2A is an exemplary illustration describing the neighbor relations detected in a distributed approach, in accordance with the prior art;
Fig. 2B is an exemplary illustration describing the neighbor relations detected in a centralized approach, in accordance with the prior art;
Fig. 2C is an exemplary illustration describing the neighbor relations detected in a hybrid approach, in accordance with the prior art;
Fig. 3 is a pictorial snapshot illustrating an O-RAN architecture in accordance with an embodiment of the present disclosure;
Fig. 4 is a pictorial snapshot illustrating a hybrid ANR in the O-RAN architecture in accordance with an embodiment of the present disclosure;
Fig. 5 is a pictorial snapshot illustrating an RIC solution architecture in accordance with an embodiment of the present disclosure;
Fig. 6 is a pictorial snapshot illustrating a near-RTRIC architecture in accordance with an embodiment of the present disclosure;
Fig. 7 is a pictorial snapshot illustrating a non-RT-RIC-MVP architecture in accordance with an embodiment of the present disclosure;
Fig. 8 is a sequence diagram illustrating a hybrid automatic neighbor relations in a disaggregate 5G RAN in accordance with an embodiment of the present disclosure;
Fig. 9 is a flowchart illustrating a method implemented by an rApp for handling the hybrid automatic neighbor relations in accordance with an embodiment of the present disclosure;
Fig. 10 is a flowchart illustrating a method implemented by an xApp for handling the hybrid automatic neighbor relations and A1 policy handling in accordance with an embodiment of the present disclosure;
Fig. 11 is a flowchart illustrating a method, implemented by the xApp,for handling the hybrid automatic neighbor relations, E2 and ANR report handling in accordance with an embodiment of the present disclosure;
Fig. 12 is a flowchart illustrating a method for creating an E2 NR control in accordance with an embodiment of the present disclosure;
Fig. 13 is a flowchart illustrating a method implemented by the xApp for handling an E2 node NRT in accordance with an embodiment of the present disclosure;
Fig. 14 is a flowchart illustrating a method for managing a table of a plurality of neighbor cells of a target cell in accordance with an embodiment of the present disclosure.

### REFERENCE LIST

LTE PCI planning -100
Operations & Maintenance (O&M) system - 102
Neighbor relations detected in a distributed approach - 200a
Neighbor relations detected in a centralized approach - 200b
Neighbor relations detected in a hybrid approach - 200c
Base station (BS) - 202a
eNodeB1 - 202b
eNodeB2 - 202c
O-RAN (Open-Radio Access Network) - 300
Service Management and Orchestrator (SMO) - 302
A1 policy agent - 304
A1 REST (Representational State Transfer) client - 306
O1 NETCONF Client (FCAPS)) - 308
Open Cloud (O-Cloud) - 312
Near-Real Time RAN Intelligent Controller (Near-RTRIC) - 314
Open Central Unit Control Plane (O-CU-CP) - 316
Open Central Unit User Plane (O-CU-UP) - 318
Open Distributed Unit (O-DU) - 320
Open Radio Unit (O-RU) - 322
User equipments - 324a1, 324a2, 324a3, 324b, 324c, 324d)
5G core network - 326
5G user plane function (UPF) - 328
Mobility management function (AMF) - 330
Network Slicing Selection Function (NSSF) - 332
Network Exposure Function (NEF) - 334
Network Function Repository Function (NRF) - 336
Policy Control Function (PCF) - 338
Unified data management (UDM) - 340
Session Management Function (SMF) - 342
Application Function (AF) - 344
Service Communication Proxy (SCP) - 346
Authentication Server Function (AUSF) - 348
Data network - 350
neighbor cells - 354b, 354c, 354d
Non-Real Time RAN Intelligent Controller (Non-RTRIC) - 402
rApp - 404
xApps - 406
RIC solution architecture - 500
BSS (Business Support System) infrastructure - 502
OSS (Operation Support System) & NOC (Network Operations Center) infrastructure - 504
Global orchestrator - 506
RAN domain orchestrator - 508
RAN O&M (Operation and management) platform - 510
Central unit (CU) - 512
Commercial off-the-shelf (COTS) infrastructure - 514
Virtual / container infrastructure - 516

The method illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### Following terms shall apply throughout the present disclosure:

NETCONF: NETCONF is a protocol defined by the IETF to "install, manipulate, and delete the configuration of network devices". NETCONF operations are realized on top of a Remote Procedure Call (RPC) layer using an XML encoding and provide a basic set of operations to edit and query configuration on a network device.

Server(residing in networking devices like) (O-RU/O-DU): The Server can be a Switch, Router, Commercially Off-the-shelf Servers, Open Distributed Units, Open Radio Units, etc.

Client(EMS/SMO/O-DU): The Client here can be a user over Element Management System (EMS), Service Management and Orchestration(SMO), Open Distributed Unit (O-DU), Open Radio Unit (O-RU) Controller or any other NETCONF client accessing the NETCONF server.

gNB: New Radio (NR) Base stations which have the capability to interface with 5G Core named as NG-CN over NG-C/U (NG2/NG3) interface as well as 4G Core known as Evolved Packet Core (EPC) over S1-C/U interface.

LTE eNB: An LTE eNB is an evolved eNodeB that can support connectivity to EPC as well as NG-CN.

Non-standalone NR: It is a 5G Network deployment configuration, where a gNB needs an LTE eNodeB as an anchor for control plane connectivity to 4G EPC or LTE eNB as an anchor for control plane connectivity to NG-CN.

Standalone NR: It is a 5G Network deployment configuration where gNB does not need any assistance for connectivity to the core network, it can connect on its own to NG-CN over NG2 and NG3 interfaces.

Non-standalone E-UTRA: It is a 5G Network deployment configuration where the LTE eNB requires a gNB as an anchor for control plane connectivity to NG-CN.

Standalone E-UTRA: It is a typical 4G network deployment where a 4G LTE eNB connects to EPC.

Xn Interface: It is a logical interface that interconnects the New RAN nodes i.e., it interconnects gNB to gNB and LTE eNB to gNB and vice versa.

Reference signal received power (RSRP): RSRP may be defined as the linear average over the power contributions (in [W]) of the resource elements that carry cell-specific reference signals within the considered measurement frequency bandwidth. RSRP may be the power of the LTE Reference Signals spread over the full bandwidth and narrowband.

Terms O-RAN system (or O-RAN) (300) and RAN can be interchangeably used throughout the draft.

Terms Service Management and Orchestrator (SMO) and Service Management and Orchestration Framework can be interchangeably used throughout the draft.

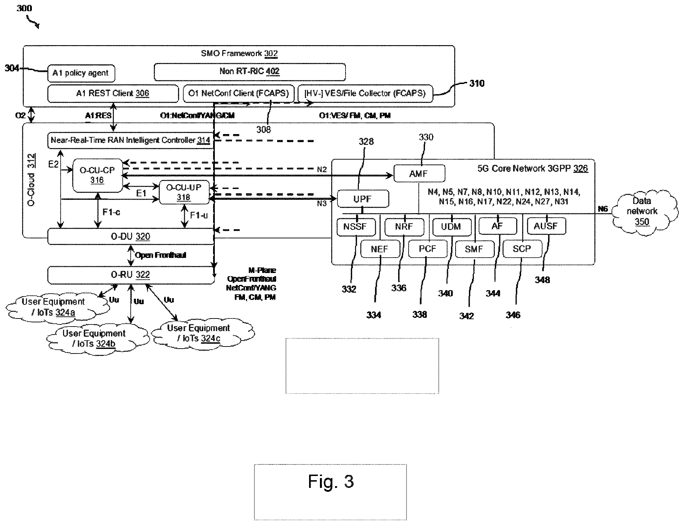

FIG. 3 illustrates an O-RAN system(or O-RAN) (300) (interchangeably be called as RAN (300)) in accordance with an embodiment of the present disclosure. The radio access network (RAN) is a part of a telecommunications system which connects individual devices to other parts of a network through radio connections. The RAN provides a connection of user equipment (UE) such as mobile phones or computers with a core network of telecommunication systems. In particular, the RAN is an essential part of the access layer in the telecommunication systems which utilizes base stations (such as e node B, g node B) for establishing radio connections. Moreover, the O-RAN (Open-Radio Access Network) (300) is an evolved version of prior radio access networks, making the prior radio access networks more open and smarter than previous generations. The O-RAN (300) provides real-time analytics that drives embedded machine learning systems and artificial intelligence back-end modules to empower network intelligence. Further, the O-RAN (300) includes virtualized network elements with open and standardized interfaces. The open interfaces are essential to enable smaller vendors and operators to quickly introduce their services or enable operators to customize the network to suit their own unique needs. Open interfaces also enable multi vendor deployments, enabling a more competitive and vibrant supplier ecosystem. Similarly, open-source software and hardware reference designs enable faster, more democratic, and permissionless innovation. Further, the O-RAN (300) introduces a self-driving network by utilizing new learning-based technologies to automate operational network functions. These learning-based technologies make the O-RAN intelligent. Embedded intelligence, applied at both component and network levels, enables dynamic local radio resource allocation and optimizes network-wide efficiency. In combination with O-RAN's open interfaces, AI-optimized closed-loop automation is a new era for network operations.

In accordance with an embodiment of the present disclosure, the O-RAN(300) includes a Service Management and Orchestrator (SMO) (302), a Non-Real Time RAN Intelligent Controller (Non-RTRIC) (402) residing in the SMO (302), a Near-Real Time RAN Intelligent Controller (Near-RTRIC)(314),an Open Central Unit Control Plane (O-CU-CP) (316), an Open Central Unit User Plane (O-CU-UP) (318), an Open Distributed Unit (O-DU) (320), an Open Radio Unit (O-RU) (322) and an Open Cloud (O-Cloud) (312).

In particular, the SMO (302) is configured to provide SMO functions/services such as data collection and provisioning services of the ORAN (300). The data collection of the SMO (302) may include, for example, data related to a bandwidth of a wireless communication network and at least one of a plurality of user equipments(324a1, 324a2, 324a3, 324b, 324c, 324d)("hereinafter referred as 324"). Moreover, the SMO (302) oversees all the orchestration aspects, management and automation of ORAN elements and resources and supports O1, A1 and O2 interfaces. Further, the SMO (302) include an A1 REST (Representational State Transfer) client (306) for handling the A1 policy management services (e.g. add/remove adapters, security certs or the like) in the SMO framework (302) and handle one or more policies using an A1 policy agent (304).

In accordance with an embodiment of the present disclosure, the Non-RTRIC (402) is a logical function enabling non-real-time control and optimization of the ORAN elements and resources, AI/ML workflow including model training and updates, and policy-based guidance of applications/features in the Near-RT RIC(314). It is a part of the SMO framework (302) and communicates to the Near-RT RIC (314) using the A1 interface. Particularly, the Near-RTRIC (314) is a logical function enabling near-real-time control and optimization of the O-RAN elements and resources via fine-grained data collection and actions over anE2 interface.

The Non-Real Time (Non-RT) control functionality (> 1s) and Near-Real Time (Near-RT) control functions (< 1s) are decoupled in an RIC (RAN Intelligent Controller).Particularly, the Non-RT functions include service and policy management, RAN analytics and model-training for some of the near-RT RIC functionality, and non-RT RIC optimization.

In accordance with an embodiment of the present disclosure, the O-CU (Open Central Unit) is a logical node hosting RRC (Radio Resource Control), SDAP (Service Data Adaptation Protocol) and PDCP (Packet Data Convergence Protocol). Particularly, the O-CU is a disaggregated O-CU and includes two sub-components: O-CU-CP(316) and O-CU-UP(318). Moreover, the O-CU-CP (316)is a logical node hosting the RRC and the control plane part of the PDCP. Further, the O-CU-CP (316) supports O1, E2, F1-c, E1, X2-c, Xn-c and NG-c interfaces for interaction with other components/entities.

Similarly, the O-CU-UP (318) is a logical node hosting the user plane part of the PDCP and the SDAP and uses O1, E1, E2, F1-u, X2-u, NG-u and Xn-u interfaces. In particular, the O-DU (320) is a logical node hosting RLC/MAC (Medium access control)/High-PHY layers based on a lower layer functional split and supports O1, E2, F1-c, F1-u,OFH CUS-Plane and OFH M-Plane interfaces.

In accordance with an embodiment of the present disclosure, the O-RU (322) is a logical node hosting Low-PHY layer and RF (Radio Frequency) processing based on a lower layer functional split. This is similar to 3GPP's "TRP (Transmission And Reception Point)" or "RRH (Remote Radio Head)" but more specific in including the Low-PHY layer (FFT/iFFT,PRACH (Physical Random Access Channel) extraction). The O-RU (322) utilizes OFH CUS-Plane and OFH M-Plane interfaces.

In accordance with an embodiment of the present disclosure, the O-Cloud (312) is a collection of physical RAN nodes (hosting various RICs, CUs, and DUs), software components (such as operating systems and runtime environments) and the SMO (302), where the SMO(302) manages and orchestrates the O-Cloud (312) from within via O2 interface.

In accordance with an embodiment of the present disclosure, the O1 interface is element operations and management interface between management entities in the SMO (302) and O-RAN managed elements, for operation and management, by which FCAPS (fault, configuration, accounting, performance, security) management, Software management, File management shall be achieved. And, the O-RAN managed elements include the Near-RTRIC (314), the O-CU (the O-CU-CP (316) and the O-CU-UP (318)), the O-DU(320), and the O-RU(322). Moreover, the management and orchestration functions are received by the aforesaid O-RAN managed elements via the O1 interface. Further, the SMO (302), in turn, receives data from the O-RAN managed elements via the O1 interface for AI model training.

In accordance with an embodiment of the present disclosure, the O2 interface is a cloud management interface, where the SMO (302) communicates with the O-Cloud (312) it resides in. Typically, operators connected to the O-Cloud (312) operate and maintain the O-RAN(300) with the O1 or O2 interfaces.

In accordance with an embodiment of the present disclosure, the A1 interface enables the communication between the Non-RTRIC(402) and the Near-RTRIC (314) and supports policy management, machine learning and enrichment information transfer to assist and train AI and machine learning in the Near-RTRIC (314).

In accordance with an embodiment of the present disclosure, the E1 interface connects the two disaggregated O-CUs i.e., the O-CU-CP (316) and the O-CU-UP (318) and transfers configuration data (to ensure interoperability) and capacity information between the O-CU-CP (316) and the O-CU-UP (318). Particularly, the capacity information is sent from the O-CU-UP (318) to the O-CU-CP (316) and includes the status of the O-CU-UP (318).

The Near-RTRIC (314) connects to the O-CU-CP (316), the O-CU-UP (318), and the O-DU(320) (combinedly called as an E2 node) with the E2 interface for data collection. In particular, the E2 node connects only to one Near-RTRIC, but one Near-RTRIC can connect to multiple E2 nodes. Typically, protocols that go over the E2 interface are control plane protocols that control and optimize the elements of the E2 node and the resources they use.

In accordance with an embodiment of the present disclosure, the F1-c and F1-u interfaces (combinedly an F1 interface)connect the O-CU-CP (316) and the O-CU-UP (318) to the O-DU(320) to exchange data about frequency resource sharing and network statuses. In particular, one O-CU communicates with multiple O-DUs via F1 interfaces.

Open fronthaul interfaces are the OFH CUS-Plane (Open Fronthaul Control, User, Synchronization Plane) and the OFH M-Plane (Open Fronthaul Management Plane)connect the O-DU (320) and the O-RU(322). Particularly, the OFH CUS-Plane is multi-functional, where the control and user features transfer control signals and user data respectively and the synchronization feature synchronizes activities between multiple RAN devices. Moreover, the OFH M-Plane optionally connects the O-RU (322) to the SMO(302). Further, the O-DU (320) uses the OFH M-Plane to manage the O-RU(322), while the SMO (322) provides FCAPS (fault, configuration, accounting, performance, security) services to the O-RU(322).

In accordance with an embodiment of the present disclosure, the X2 interface is broken into the X2-c interface and the X2-u interface. The former X2-c interface is for the control plane and the latter X2-u interface is for the user plane that sends information between compatible deployments, such as a 4G network's eNBs or between an eNB and a 5G network's en-gNB.

Similarly, the Xn interface is also broken into the Xn-c interface and the Xn-u interface to transfer control and user plane information respectively between next generation NodeBs (gNBs) or between ng-eNBs or between the two different deployments.

In accordance with an embodiment of the present disclosure, the NG-c (control plane interface) and the NG-u (user plane interface) connect the O-CU-CP(316) and the O-CU-UP(318) respectively to a 5G core network (326). Particularly, the control plane information is transmitted to a 5G access and mobility management function (AMF)(330) that receives connection and session information from the user equipment and the user plane information is relayed to a 5G user plane function (UPF) (328) handling tunneling, routing and forwarding and the like.

In particular, the management plane (M-Plane), the O-DU (320) and the SMO (302) are used to manage the O-RU(322) (or O-RUs), wherein the O-DU (320) and the SMO(302) use NETCONF (Network Configuration Protocol) to manage the O-RU (322). Alternatively, the O-DU (320) and other NMSs (Network Management Systems) may manage the O-RU (322) via aNETCONF client. In such a case, the SMO (302) (or the NMS) corresponds to the NETCONF client (or O1 NETCONF Client (FCAPS)) (308) while the O-RU(322) corresponds to a NETCONF server and the O-DU (320) can act as both the NETCONF client and the NETCONF server depending on models such as a hierarchical model and a hybrid model known to a person skilled in the art.

NETCONF operations are realized on top of a Remote Procedure Call (RPC) layer using an XML (Extensible Markup Language) encoding and provide a basic set of operations to edit and query configuration on a network device. NETCONF runs primarily over Secure Shell (SSH) transport. The protocol messages are exchanged on top of a secure transport protocol. Further, NETCONF reports management information that is useful to NNMi (Network Node Manager). In terms of SDN (Software Defined Networks), NETCONF is usually referenced as a southbound API (Application Programming Interface) from an SDN controller to network agents like switches and routers due to its potential for supporting multi-vendor environments.

In accordance with an embodiment of the present disclosure, the 5G core network (326) may include a Network Slicing Selection Function (NSSF) (332), a Network Exposure Function (NEF) (334), a Network Function Repository Function (NRF) (336), a Policy Control Function (PCF) (338), a Unified data management (UDM) (340), a Session Management Function (SMF) (342), an Application Function (AF) (344), a Service Communication Proxy (SCP) (346) and an Authentication Server Function (AUSF) (348). The NSSF (332), the NEF (334), the NRF (336), the PCF (338), the UDM (340), the SMF (342), the AF (344), the SCP (346) and the AUSF (348) may communicate with a data network (350) using various interfaces (e.g., N4, N5, N7, N8, N10, N11, N12, N13, N14, N15, N16, N17, N22, N24, N27, N31 or the like).

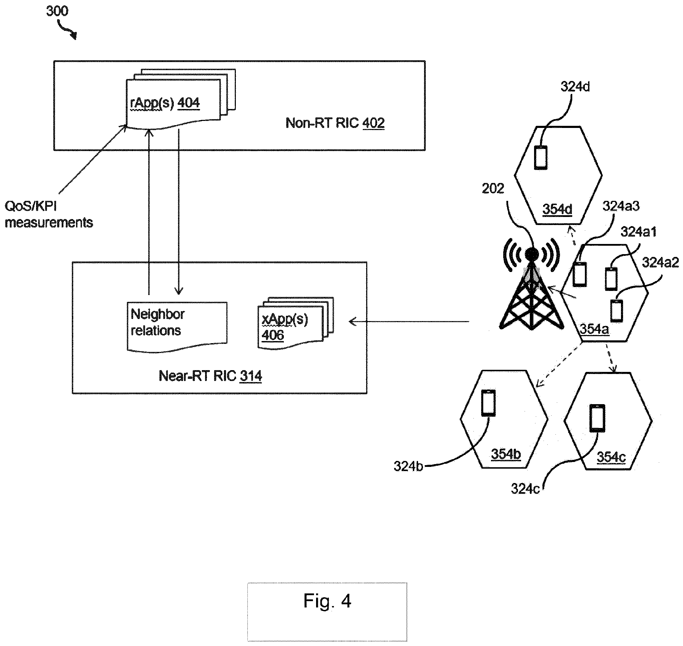

Fig. 4 illustrates an hybrid ANR in the O-RAN architecture (or RAN or system) (300) to manage a plurality of neighbor cells (354b, 354c, 354d) of each target cell in accordance with an embodiment of the present disclosure. The Non-RTRIC (402) comprises a Non-RTRIC Application such as rApp(404) connected/integrated via an R1 interface. In particular, the rApp is a modular microservice and an independent software plug-in to the Non-RTRIC (402) deployed to provide functional extensibility to the ORAN by third parties. Moreover, the Non-RTRIC may provide different functionalities by using programmable modules as rApp(s), from different operators and vendors. Further, there may be one or more rApps(404) in the Non-RTRIC (402). And, the services delivered by the Non-RTRIC are composed of the rApp(s). With the Non-RTRIC, the rApp(s)may be designed to provide granular service assurance and may improve the quality-of-experience wherever needed.

In accordance with an embodiment of the present disclosure, the Near-RTRIC (314) may host one or more xApps(406) that use E2 interface to collect near real-time information and provide value added services. The xApp is an independent software plug-in to the Near-RTRIC (314) providing functional extensibility to the RAN by third parties. Moreover, the Near-RTRIC provides different functionalities by using programmable modules as xAPPs, from different operators and vendors.

In accordance with an embodiment of the present disclosure, each E2 node (could be DU or CU (512)), preferably the CU (512) capture radio signal quality measurements from the plurality of user equipments (UEs) (324a1, 324a2, 324a3) associated with a target cell. Particularly, the radio signal quality measurements are associated with each of the plurality of neighbor cells (354b, 354c, 354d) of the target cell. Moreover, the target cell may be any of the plurality of neighbor cells (354b, 354c, 354d). For instance, if a cell (354b) acts as the target cell, then the neighbor cells will be 354c, 354d. Similarly, if a cell (354c) acts as the target cell, then the neighbor cells will be 354b, 354d and so on and so forth. Further, the CU (512) reports the radio signal quality measurements for all subscribed target cells to at least one xApp (406) that is in connection with the Near-RTRIC (314). The CU (512) is in connection with the Near-RTRIC (314) over the E2 interface. In accordance with an embodiment of the present disclosure, the plurality of neighbor cells (354b, 354c, 354d) may be ranked and labeled by at least one xApp (406) based on the radio signal quality measurements associated with each of the plurality of neighbor cells. Particularly, the ranking of the plurality of neighbor cells (354b, 354c, 354d) is done by assigning a rank to each of the plurality of neighbor cells (354b, 354c, 354d) based on calculation of the radio signal quality for each of the plurality of neighbor cells (354b, 354c, 354d). Moreover, the labeling may be done using machine learning or any other suitable automated process. For exemplary purposes, only three neighbor cells have been shown, however there may be more or less than three neighbor cells.

Further, the CU (512) captures a handover performance from each target cell. The handover performance is associated with the target cell and with each of the plurality of neighbor cells (354b, 354c, 354d) of the target cell. Particularly, the handover performance is defined by one or more of a number of attempted handovers between each of the plurality of neighbor cells and the target cell and a number of successful handovers between each of the plurality of neighbor cells and the target cell. Moreover, the CU (512) reports the handover performance of all subscribed cells to at least one rApp (404) in connection with the Non-RTRIC (402) within the SMO (302). Further, the CU (512) is in connection with the SMO (302) over the O1 interface. At least one rApp (404) creates a policy and sends the policy to at least one xApp (406) in connection with the Near-RTRIC (314) over the A1 interface. The policy may also be referred to as an A1 NR policy or A1 policy. Subsequently, based on the ranking and the policy, at least one xApp (406) in connection with the Near-RTRIC (314) takes and manages an action The manage action may be associated with the plurality of neighbor cells (354b, 354c, 354d).

Subsequently, the manage action comprises adding a cell to the plurality of neighbor cells when the cell is identified as a good neighbor, wherein the good neighbor is determined based on at least one of a radio signal quality information, a radio signal quality threshold, and priority of each of the plurality of neighbor cells. Alternatively, the manage action comprises rearranging priorities of each of the plurality of neighbor cells (354b, 354c, 354d) based on the ranking. Alternatively, the manage action comprises removing a cell from the plurality of neighbor cells when the cell is identified as a bad neighbor. The bad neighbor is so labeled based on at least one of a handover performance information derived from attempted handovers, a handover failure information, a handover successful information, an attempted handovers threshold, a handover success ratio, and a handover success ratio threshold

In accordance with an exemplary implementation of the present disclosure, each E2 node (could be DU or CU) reports its NRT and aggregated ANR reports from its UE(s)(324a1, 324a2, 324a3, 324b, 324c, 324d) for each cell (354a, 354b, 354c, 354d) to the Near-RT RIC (314) on a subscription basis. Particularly, the Near-RT RIC (314)/ANR-xApp(406) keeps its version of NRT for each cell in its Radio-Network Information Base (R-NIB). The ANR-xApp (interchangeably "xApp") (406) may maintain an "infinite-size" (e.g., n*Max_E2node_NRT_Size, n = 2, 3, ...) NRT sorted by latest RSRPs reported for the neighbors in descending order but updated the E2 node with only top m neighbors determined by Max_E2node_NRT_Size (=16 intraFreqNeighCells by 3GPP standard) and other parameters.

In an exemplary implementation, for a particular cell, the top Max_E2node_NRT_Size neighbor in the NRT in the Near-RT RIC (314) and NRT in the E2 node are different, but they tend to converge somehow over time. The temporal discrepancy in NRTs may include different RSRP metrics used in the xApp (406) and the E2 node, e.g., if short-term average RSRP is used or not, different thresholds used by the xApp (406) and the E2 node, impact from the neighbor update decision of the rApp(404) and possible vendor specific mechanism for NRT update in the E2 node.

Further, the ANR-xApp (406) modifies its NRTs and sends the modification to the relevant E2 node(s) via anE2 NR control. A control message contains a list of neighbors to be added and/or removed. It also contains a subset of the Near-RTRIC NRT, which lists the top m neighbors, depending on the level of support from the E2 node. Particularly, the NR control from the near-RT RIC acts as one type of input for the E2 node to update its NRT, which needs to be supported by the E2 node. The ANR-xApp (406) also modifies the NRTs in the near-RTRIC via an A1 policy, after which the ANR-xApp(406) sends the modification to the relevant E2 node(s) via theE2 NR control.Further,by removing a neighbor the notion that the neighbor relation is retained and marked so that it is not considered for handovers.

Similarly, the non-RTRIC (402) does not keep its own version of NRTs since this may lead to explosion of NRT related data in the non-RTRIC due to the fact that the non-RTRIC usually acts as a central controller for multiple near-RTRICs or the whole network and keeping NRTs in the non-RTRIC may also increase the complexity of the algorithm for coordination of NRTs at three different entities. Further, the NRT for each cell I in the near-RTRIC has the following fields for each neighbor j:
a) Neighbor number/index j,
b) Neighbor NR-CGI,
c) Neighbor PCI,
d) RSRP_anr (j),
e) Timestamp_added, when this neighbor was added,
f) Removed_by_rApp (1 or 0, set when xApp receives neighbor deletion from rApp for this neighbor), and
g) Timestamp_removed, when Removed_by_rApp was set to 1

In accordance with an embodiment of the present disclosure, each UE (324a1, 324a2, 324a3, 324b, 324c, 324d) is configured by its serving gNB (or serving cell, for example 354a, 354b, 354c, 354d). In order to report PCI, NR-CGI, RSRP measurements or reporting parameters (reporting threshold, reporting interval, number of reports, whose values are TBD) of each neighbor cell (354b, 354c, 354d) may be triggered by a pre-defined event, which may be an A4 event or other event, e.g., A3 event or other TBD event. If the reporting interval is in 100s ms, then a short-term average of RSRP measurements can be used to evaluate a neighbor (or neighbor).

In accordance with an embodiment of the present disclosure, the E2 interface is established between the near-RTRIC (314) and each E2node (e.g., gNB/CU/DU) using anE2 SETUP procedure. The ANR-xApp (406) in the near-RTRIC (314) subscribes to the NRT and ANR report from each E2 node over the E2 interface. In particular, the ANR report for cell i contains a 3-tuple (e.g., NR-CGI, PCI and RSRP(s)) for each neighbor cell (354b, 354c, 354d) that the UEs (324a1, 324a2, 324a3), who are camped on to cell i, has visibility to. After the defined event triggers at the UE (324a1, 324a2, 324a3), the E2 node receives the UE reports (e.g., NR-CGI, PCI, RSRP measurements) for each neighbor cell (354b, 354c, 354d). If the reporting interval is reasonably small (e.g., in 100s ms). Moreover, the E2 node performs an optional short-term average of the RSRP measurements reported by the UE (324) for the neighbor cell(s) (354b, 354c, 354d) the UE (324) sees. Further, the E2 node sends an ANR report for the serving cell (354a) to the near-RTRIC (314), where the RSRP(s) may be a short-term averaged RSRP value or a raw RSRP measurement value or a list of raw RSRP measurement values.

In accordance with an embodiment of the present disclosure, the ANR-xApp(406) receives the ANR report from E2 node. For each neighbor cell j in the ANR report, the ANR-xApp(406) performs an optional short-term average of the RSRP measurements to get a single RSRP value if the report contains a list of RSRP measurements for that neighbor cell and the reporting interval is reasonably small (e.g., in 100s ms), or gets the first or the only RSRP value otherwise. The resulting RSRP is named as RSRP_anr(j). The ANR-xApp (406) puts neighbor cell j in the NRT of the serving cell (354a) specified in the E2 ANR report if RSRP_anr(j) >NRT_ADD_Threshold and j is not already in the NRT of the serving cell (354a) and the table size is less than maximum size. Further, the ANR-xApp (406) sends an NR control message to the E2 node of the serving cell (354a) over the E2 interface, listing all the neighbors that need to be updated by the E2 node for the serving cell, if there is any neighbor change. Optionally, the ANR-xApp(406) may send top m neighbors in its NRT.

In accordance with an embodiment of the present disclosure, if the E2 node receives the NR control message from the Near-RT RIC (314), the E2 node may try to update the neighbor(s) in its NRT based on the NR Control message. Each E2 node may be configured to report a PM data for each cell i to the SMO (302) over the O1 interface. The PM data may be, for example, but not limited to number of attempted HOs to each neighbor j over a last T seconds, HO_attempted (j), Number of successful HOs to each neighbor j over the last T seconds: HO_successful (j), and T » RSRP reporting interval.

Further, the ANRE-rApp(interchangeably "rApp") (404) in the non-RTRIC (402) subscribes to the PM data at the SMO (302). When the SMO (302) receives the PM data, the SMO (302) sends the PM data to the Non-RT RIC (402), forwards the data to the ANRE-rApp (404). The ANRE-rApp(404) receives the PM data, i.e., a list of (HO_attempted (j), HO_successful (j)) pairs for cell i. For each neighbor j, the ANRE-rApp(404) marks j as a removed (bad) neighbor of cell iif HO_attempted (j) >HO_attempted_threshold and HO_successful (j) / HO_attempted (j) <HO_min_S_ratio.

Alternatively, the ANRE-rApp(404) sends an A1 neighbor relation (NR) policy to the ANR-xApp (406), listing all the bad neighbors that need to be removed by the ANR-xApp (406), if there is any bad neighbor for cell i. When the ANR-xApp(406) receives the A1 NR policy from the ANRE-rApp(404) for cell i, the ANR-xApp (406) marks the neighbor(s) on the bad neighbor list as "removed" in RIC NRT for cell i. Further, the ANR-xApp (406) sends the NR control message over the E2 interface to the E2 node of the serving cell i, listing all the neighbors that need to be updated (removed or added) by the E2 node for cell i.

In accordance with an embodiment of the present disclosure, there are architectural alternatives where ANR xApp is not present and/or ANRE- rApp interfaced directly with E2 nodes, or even if ANR xApp is present and still ANRE- App interfaced directly with E2 nodes.

In accordance with an embodiment of the present disclosure, the E2 node tries to update its NRT for cell i based on the E2 NR control message. Instead of sending a list of neighbors that the E2 node should add or remove, the xApp(406) may send its entire NRT or the top M neighbors to the E2 node. This is a more robust way for updating NRT in the E2 node since the impact due to the loss of a control message may be reduced by a following control message, but this approach also requires more process by the E2 node.

In accordance with an embodiment of the present disclosure, if RSRP for an existing neighbor is higher than the one in NRT for the same neighbor (due to report from a UE), the O-RAN system (or system) reflects that in NRT, i.e., update the RSRP in the NRT.

In accordance with an embodiment of the present disclosure, if the UE reports a neighbor with RSRP higher than the lowest RSRP in the NRT and the NRT table is at the full capacity, the system replaces the lowest RSRP neighbor with the new one.

In accordance with an embodiment of the present disclosure, the system maintains an "infinite-size" (e.g., 2*Max_E2node_NRT_Size) NRT in the xApp (406) sorted by latest RSRP reported for a given neighbor, but the system updates the E2 node with only the top Max_E2node_NRT_Size neighbors. Particularly, the xApp (406) removes a neighbor due to input from the rApp (404), but then the xApp (406) adds back that neighbor. Moreover, the xApp (406) keeps a timestamp for a "removed" (marked as removed in the "infinite-size" NRT) neighbor for when it was "removed", and considers adding the same neighbor back only after a certain elapsed time. Further, the rApp(404) observes HO failures for a neighbor that is not in the current NRT at the xApp(406) (due to the momentary mismatch between the NRTs at the E2 node and at the xApp).

When the xApp (406) processes the ANR reports from the E2 nodes, if certain time has elapsed since the timestamp for a neighbor of a cell, the neighbor of the cell will be removed from the RIC NRT, which allows the near-RTRIC to add this neighbor back again to the RIC NRT and the E2 node NRT if the requirement to do so is met. Hence, the ping-pong behavior can be avoided.

In accordance with an embodiment of the present disclosure, the rApp (404) and the xApp (406) process, respectively, their input data (e.g., HO measurement data for rApp (404) and the ANR reports for the xApp (406)) in a batch fashion periodically by dividing time into time periods. At the end of each period, triggered by a timer, the rApp (404) or the xApp (406) process all the data received in that period and run its neighbor update techniques. This results in more efficient use of computing and networking resources and more flexibility in granularity of the processing and thus provides more robust data in different scenarios, where for example the E2 node(s) (804) may not support all the granularities the xApp needs for the data.

In accordance with an embodiment of the present disclosure, when ANR-xApp (406) receives the A1 NR policy from theANRE-rApp (404) for cell i, the ANR-xApp (406) marks the neighbor(s) on the "removed" neighbor list as "removed" in RIC NRT for cell iand records the current time as the timestamp for that neighbor. A neighbor marked as "removed" (removed by the rApp (404)) in the RIC NRT will be treated as blocked and will not be added to the NRT in the E2 node (804). The rApp(s) (404) improves neighbor relations using QoS/KPI (Quality of Service/Key Performance Indicator)measurements. The xApp(s)(406) creates neighbor relation tables using the UE measurements. The RIC enables a cost effective and efficient approach for implementing the hybrid ANR for the O-RAN system (300) using the neighbor relations and neighbor relation tables.

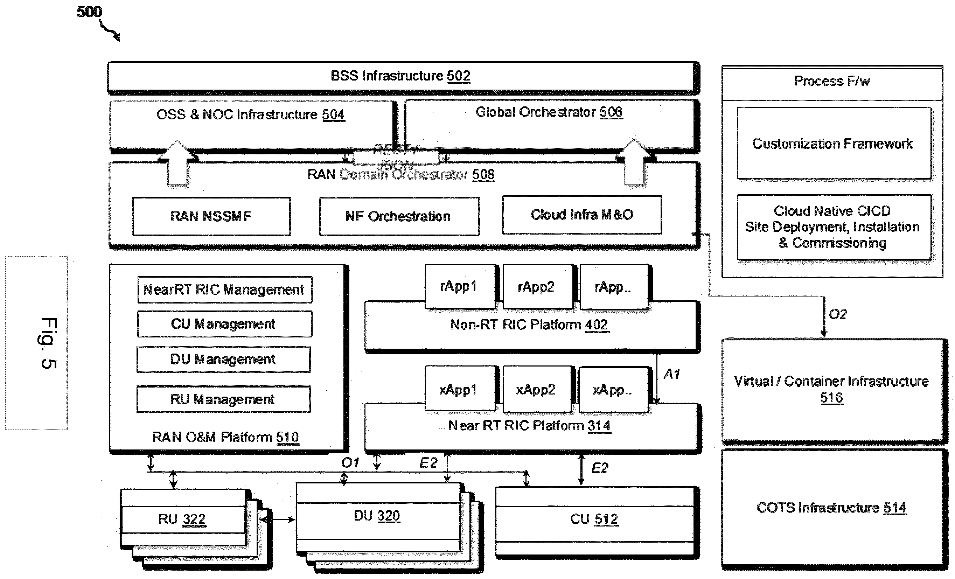

FIG. 5 illustrates an exemplary RIC solution architecture (500) in accordance with an embodiment of the present disclosure. The RIC solution architecture includes a BSS(Business Support System) infrastructure (502), an OSS (Operation Support System) & NOC (Network Operations Center) infrastructure (504), a global orchestrator (506), a RAN domain orchestrator (508), a virtual / container infrastructure (516), a commercial off-the-shelf (COTS) infrastructure (514) and a RAN O&M (Operation and management) platform (510). The COTS infrastructure supports IEEE 1588v2 Precise Time Protocol (PTP), so as to improve the time synchronization accuracy of minimum level (around 65ns) for carrier aggregation in the O-RAN system (300). The RAN domain orchestration (508) automates an end-to-end service lifecycle from planning and design to activation, optimization and assurance across the entire multi-vendor Open vRAN domain.

In the RIC solution architecture, the vRAN domain orchestration solution brings together the orchestration, OSS and analytics functions needed to fully automate all aspects of the RAN domain from planning and design to activation, assurance and optimization. In particular, the vRAN domain orchestration solution collects the data from the BSS infrastructure (502), the OSS & NOC infrastructure (504), the global orchestrator (506), the RAN domain orchestrator (508), the virtual/container infrastructure (516) and the COTS infrastructure (514). Moreover, the BSS infrastructure (502) provides 'BSS as a service', making Communication Service Providers (CSPs) focus on creating, launching new services, and improving customer experience. Further, the RAN O&M platform (510) supports near-RTRIC management, CU management, DU management and RU management.

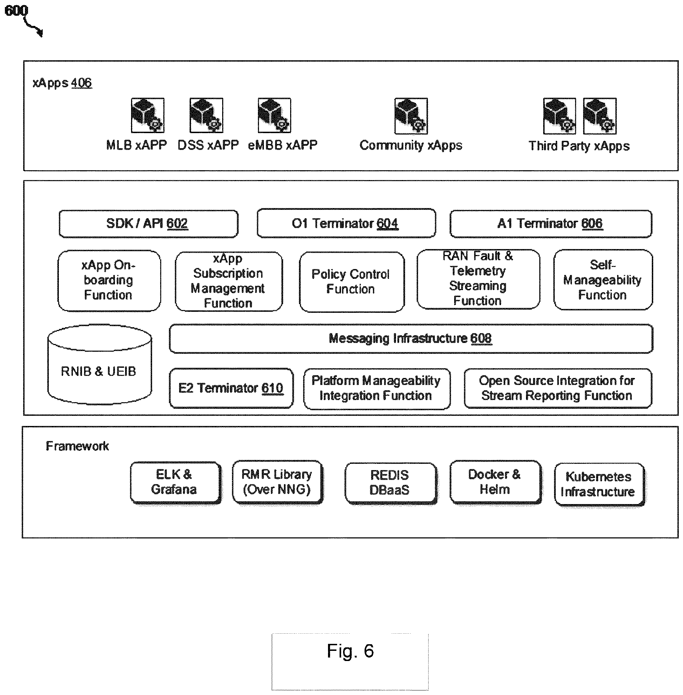

Fig. 6 is a pictorial snapshot illustrating a near-RTRIC architecture (600) in accordance with an embodiment of the present disclosure. In particular, the near-RTRIC architecture (600) includes a messaging infrastructure (608) and supports an xApp on-boarding function, an xApp subscription management function, a policy control function, a RAN fault & telemetry streaming function, a self-manageability function, a platform manageability integration function and an open source integration for a stream reporting function. Moreover, the near-RTRIC architecture (600) also includes an E2 terminator (610), an RNIB & UEIB, the xApp(s) (406), an SDK/API (Software Development Kit/Application Programming Interface) (602), an O1 terminator (604), an A1 terminator (606), ELK & Grafana, RMR Library, REDIS dBaaS, Docker & Helm and Kubernetes Infrastructure. Generally, a Kubernetes infrastructure is a combination of resources (including servers, physical or virtual machines, cloud platforms and more) that supports a Kubernetes environment. Docker & Helm is an application package manager which can be used to run on top of Kubernetes. REDIS dBaaS is a fully managed in-memory NoSQL database, easily deployed in our integrated environment. ELK & Grafana supports data querying and analysis.

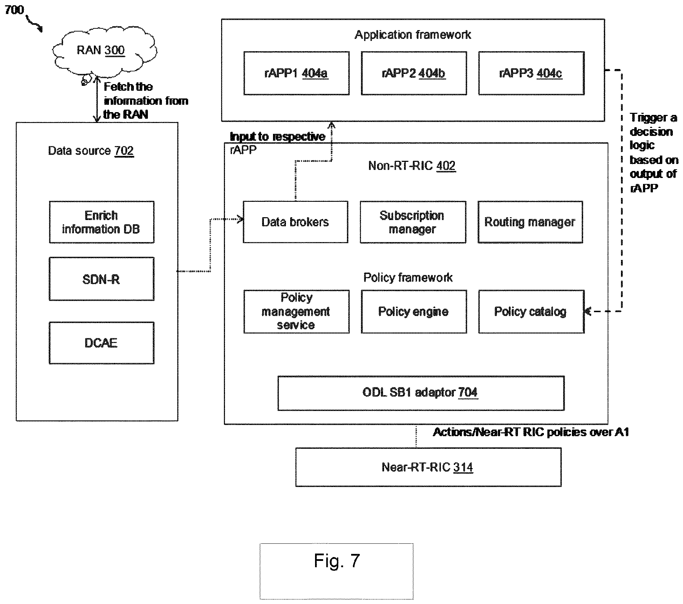

Fig. 7 is a pictorial snapshot illustrating a non-RT-RIC-MVP (Minimum viable plan) architecture (700) in accordance with an embodiment of the present disclosure. In particular, the non-RT-RIC-MVP architecture (700) includes an application framework having the rApp(s)(404) such as, but not limited to, rApp1 (404a), rApp2 (404b), rApp3 (404c), the non-RTRIC(402), the near-RTRIC (314), a data source (702) and an ODL SB1 adaptor (704). Moreover, the operations and functions of the application framework, the Non-RTRIC (402) and the Near-RTRIC (314). Furthermore, the policy framework (residing in the non-RTRIC (402)) includes a policy management service, a policy engine, and a policy catalog. The policy management service, the policy engine, and the policy catalog are used for handling the policy management function. And, the policy management function corresponds to configuration of service, resource and platform related policies. Further, the policy definition, execution, enforcement capability are exposed through the rApp(s) (404).

In accordance with an embodiment of the present disclosure, the data source (702), fetching information from the RAN (300) includes an enrich information DB, a software defined network-radio (SDN-R) and a DCAE (Data Collection, Analytics and Events). The SDN-R is implemented as the data source for the policy framework. The DCAE is utilized for VES (Virtual Network Function (VNF) Event Stream) collection, data brokerage, and data source for policy framework. Additionally, the non-RT RIC-MVP architecture (700) may be integrated with southbound systems through A1 interfaces.

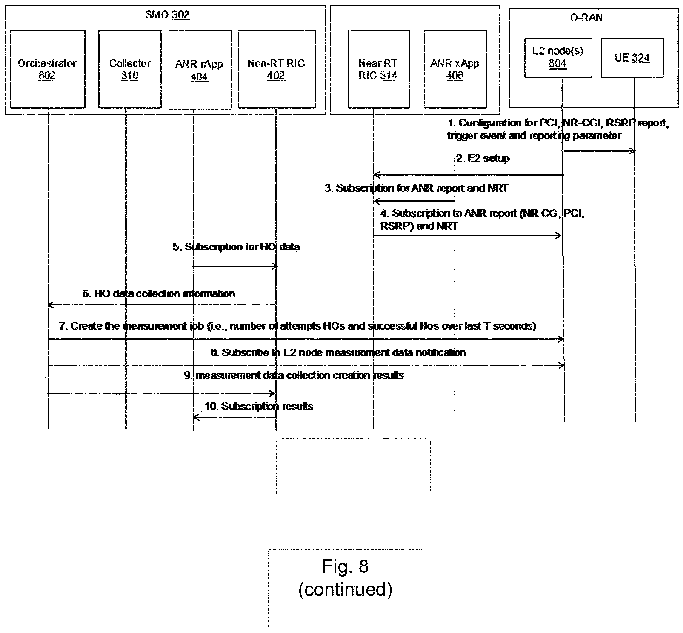

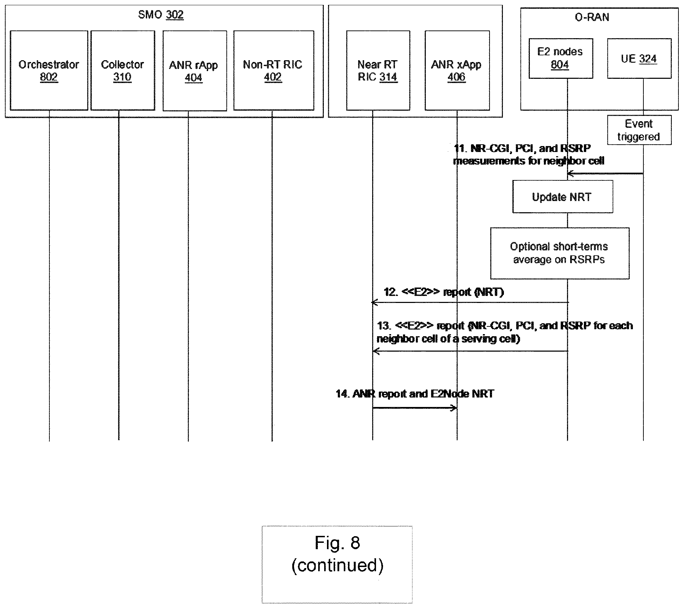

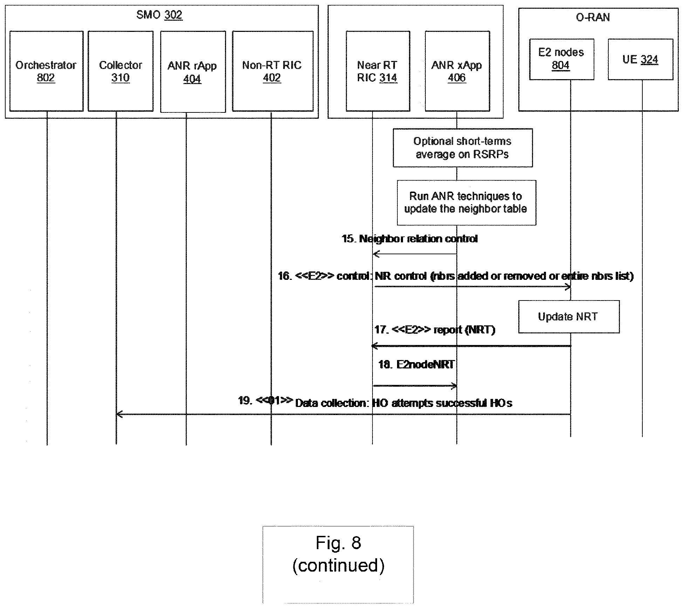

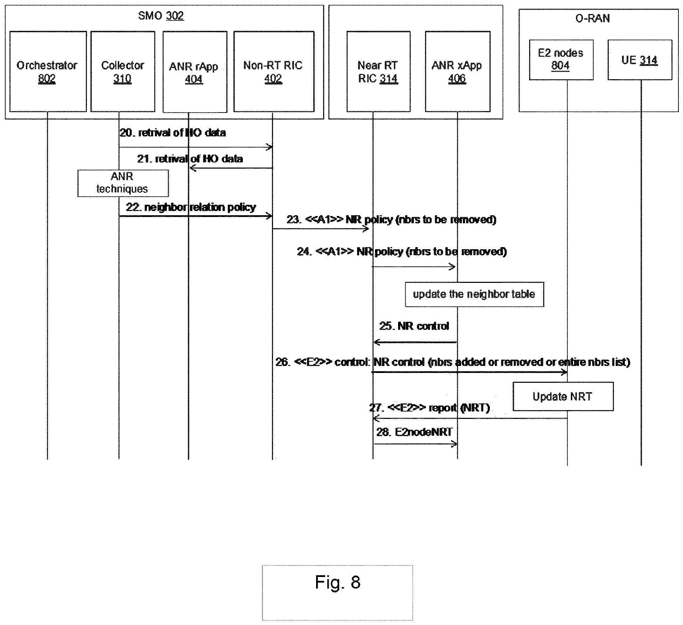

Fig. 8 is a sequence diagram (800) illustrating a hybrid automatic neighbor relations in a disaggregate 5G RAN in accordance with an embodiment of the present disclosure. Method 800 starts at step 1 and proceeds to steps 2, 3, 4, 5, 6, 7, 8, 9, 10, 11, 12, 13, 14, 15, 16, 17, 18, 19, 20, 21, 22, 23, 24, 25, 26, 27, 28.

At step 1, the E2 nodes (804) sends the configuration for the PCI, the NR-CGI, the RSRP report, the trigger event and the reporting parameter to the UE (324). The reporting parameter may be, for example, but not limited to, a reporting threshold, a reporting amount, and a reporting interval.

At step 2, the E2 nodes (804) sends the E2 setup request to the near-RT RIC (314).

At step 3, the ANR xApp (406) sends the subscription for the ANR report and NRT

At step 4, the near-RTRIC (314) sends the subscription of the ANR report (e.g., NR-CG, PCI, RSRP or the like) and NRT to the E2 nodes (804).

At step 5, the ANRE-rApp (404) sends the subscription of the HO data to the non-RTRIC (402).

At step 6, the non-RTRIC (402) sends the HO data collection information to an orchestrator (802).

At step 7, the orchestrator (802) sends a request to create the measurement job (i.e., number of attempted HOs and successful HOs over last T seconds) to the E2 node(s) (804).

At step 8, the orchestrator (802) subscribes to the E2 node (804) for an E2 node measurement data notification.

At step 9, the orchestrator (802) sends the measurement data collection creation results to the non-RT RIC (402).

At step 10, the non-RTRIC (402) sends the subscription results to the ANRE-rApp(404). The event (e.g., A4 event, the A3 event or the like) is triggered at UE (324).

At step 11, the UE (324) sends the NR-CGI, PCI, and RSRP measurements for the neighbor cell to the E2 node (804). Particularly, the E2 node (804) updates the NRT. Moreover, the E2 node (804) may perform the short-term average on RSRPs optionally.

At step 12, the E2 node (804) sends the report corresponding to the NRT to the near-RTRIC (314).

At step 13, the E2 node (804) sends the report (e.g., NR-CGI, PCI, and RSRP for each neighbor cell of a serving cell) to the near-RTRIC (314).

At step 14, the near-RTRIC (314) sends the ANR report and E2 Node NRT to the ANR xApp (406). Optionally, the ANR xApp (406) may perform the short-terms average on RSRPs and run the ANR techniques to update the neighbor table.

At step 15, the ANR xApp (406) sends the neighbor relation control to the near-RTRIC (314).

At step 16, the near-RTRIC (314) sends the NR control (nbrs added or removed or entire nbrs list) to the E2 node(s)(804). Particularly, the E2 node(s) (804) updates the NRT.

At step 17, the E2 node(s) (804) sends the report (NRT) via the E2 interface to the near-RTRIC (314).

At step 18, the near-RTRIC (314) sends the E2 node NRT to theANR xApp (406).

At step 19, the E2 node(s) (804) sends the data collection (e.g., HO attempts successful Hos or the like) to a collector ([HV-] VES/File Collector (FCAPS)) (310).

At step 20, the collector (310) sends a request for retrieval of HO (handover) data to the non-RTRIC (402).

At step 21, the non-RTRIC (402) sends the retrieval of HO data to the ANRE-rApp(404). In particular, the collector (310) executes the ANR techniques.

At step 22, the collector (310) sends the neighbor relation policy to the non-RTRIC (402).

At step 23, the non-RTRIC (402) sends the NR policy (e.g., nbrs to be removed) to the near-RTRIC (314) via A1 interface.

At step 24, the near-RTRIC (314) sends the NR policy (nbrs to be removed)to the ANR xApp (406). After receiving the NR policy, the ANR xApp (406) updates the neighbor table.

At step 25, the ANR xApp (406) sends the NR control information to the Near-RTRIC (314).

At step 26, the Near-RTRIC (314) transmits the NR control (nbrs added or removed or entire nbrs list) to the E2 node(s) (804). Accordingly, the E2 node(s) (804) updates the NRT.

At step 27, the E2 node(s) (804) sends the report (NRT) to the Near-RTRIC (314) via the E2 interface.

At step 28, the Near-RTRIC (314) sends the E2 node NRT to the ANR xApp (406).

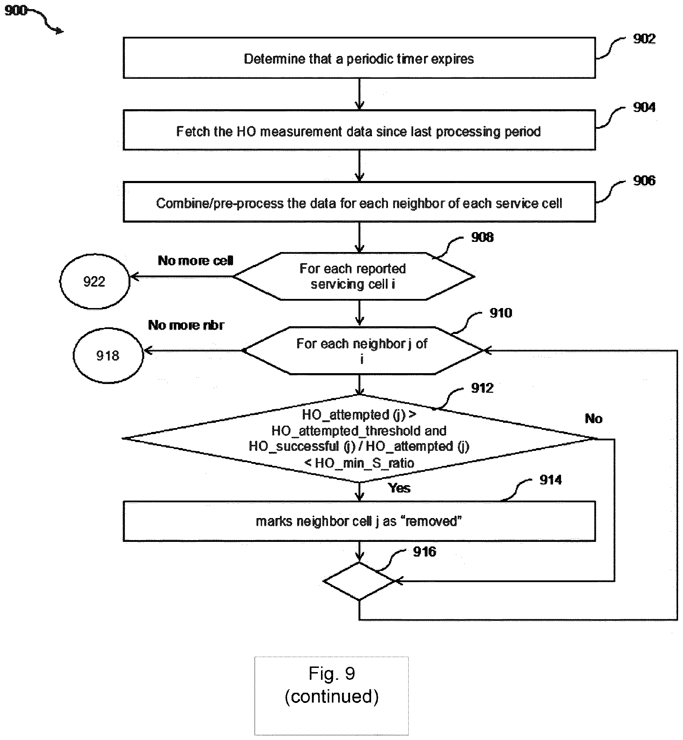

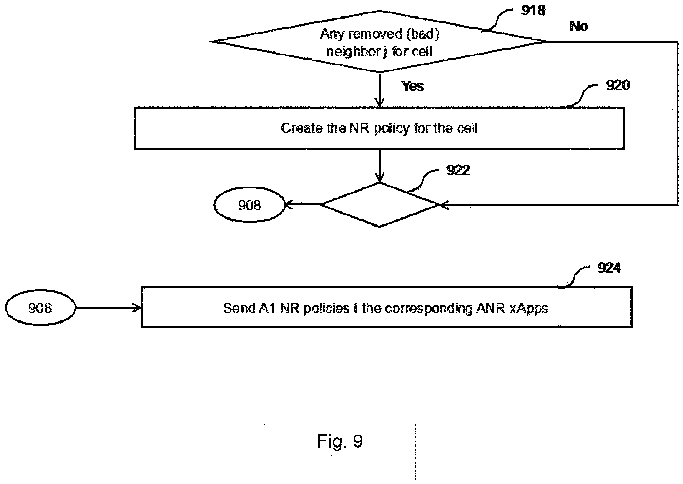

Fig. 9 is a flowchart (900) illustrating a method implemented by an rApp for handling the hybrid automatic neighbor relations in accordance with an embodiment of the present disclosure. Method 900 starts at step 902 and proceeds to steps 904, 906, 908, 910, 912, 914, 916, 918, 920, 922, 924.

At step 902, the method includes determining that a periodic timer is expired.

At step 904, the HO measurement data from the last processing period is fetched.

At step 906, the data for each neighbor of each service cell is combined/preprocessed.

At step 908, it is detected if service (or servicing) cell i is available in the report.

In one embodiment, if no more cell is available then the method proceeds to step 924.

At step 910, the NBR for each neighbor j of i is detected.

In one embodiment, if no nbr is left, then the method proceeds to step 918.

At step 912, it is determined whether HO_attempted (j) >HO_attempted_threshold and HO_successful (j) / HO_attempted (j) <HO_min_S_ratio.

In one embodiment, if the above condition is true (i.e., HO_attempted (j) >HO_attempted_threshold and HO_successful (j) / HO_attempted (j) <HO_min_S_ratio) then, the method proceeds to step 914.

In another embodiment, if the above condition is false, then the method jumps to step 916.

At step 914, the neighbor cell j is marked as "removed" and is further forwarded at step 916.

At step 916, outputs of 912 and 914 are aggregated and sent back to step 910.

At step 918, any removed (or bad) neighbor j for the cell is determined.

In one embodiment, if a removed (or bad) neighbor j exists for the cell then the method proceeds to step 920.

At step 920, the NR policy for the cell is created and is transmitted to step 922.

In one embodiment, if the removed (or bad) neighbor j does not exist for the cell, then the method jumps to step 922.

At step 922, the outputs of 918 and 922 are aggregated and sent back to step 908.

At 924, the A1 NR policies are sent to the corresponding ANR xApps (406).

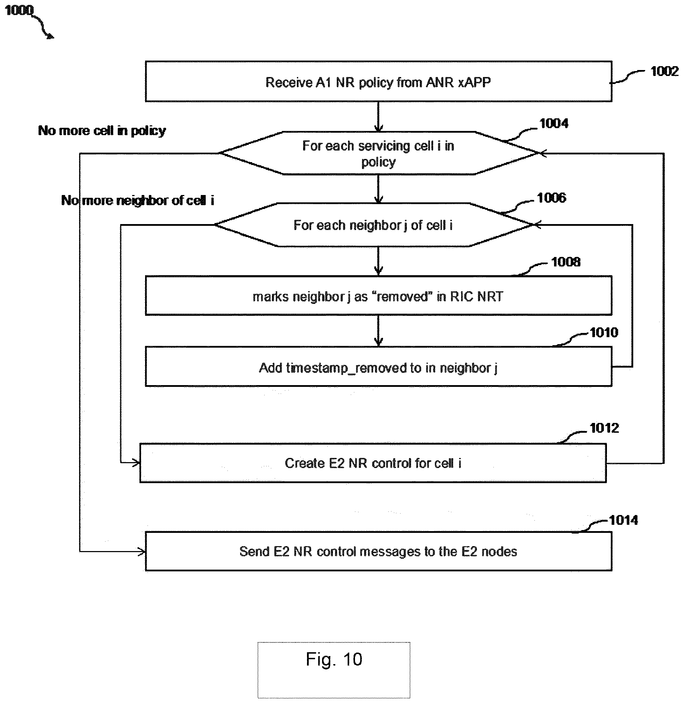

Fig. 10 is a flowchart (1000) illustrating a method implemented by an xApp (406) for handling the hybrid automatic neighbor relations and A1 policy handling in accordance with an embodiment of the present disclosure. Method 1000 starts at step 1002 and proceeds to steps 1004, 1006, 1008, 1010, 1012.

At step 1002, the A1 NR policy is received from the ANR xAPP (406).

At step 1004, it is detected if each service (or servicing) cell i is in the policy.

In one embodiment, if no more cell is in the policy then the method proceeds to step 1014.

At step 1006, it is detected if a neighbor of cell i is available for each neighbor j of cell i.

In one embodiment, if no more neighbor of the cell is available, then the method proceeds to step 1012.

At step 1008, the neighbor j is marked as "removed" in the RIC NRT.

At step 1010, a timestamp_removed is added in the neighbor j.

At step 1012, the E2 NR control for cell i is created.

At step 1014, the E2 NR control message is sent to the E2 node(s) (804).

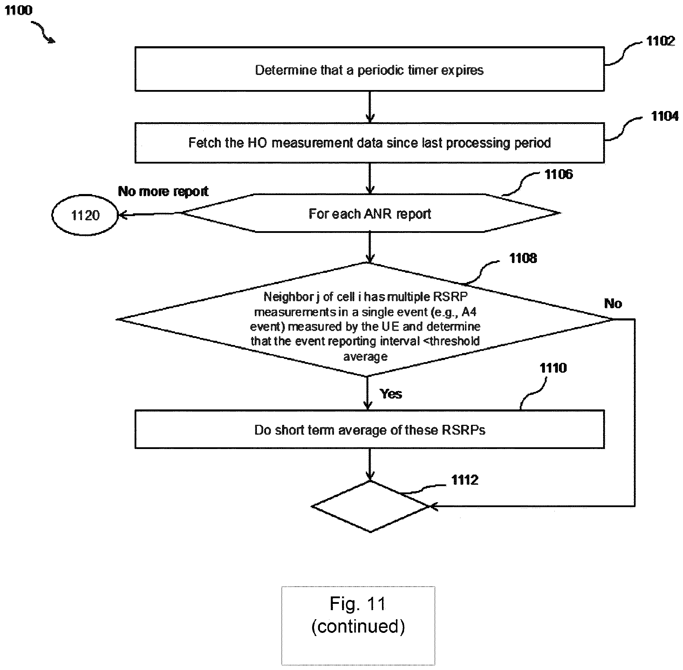

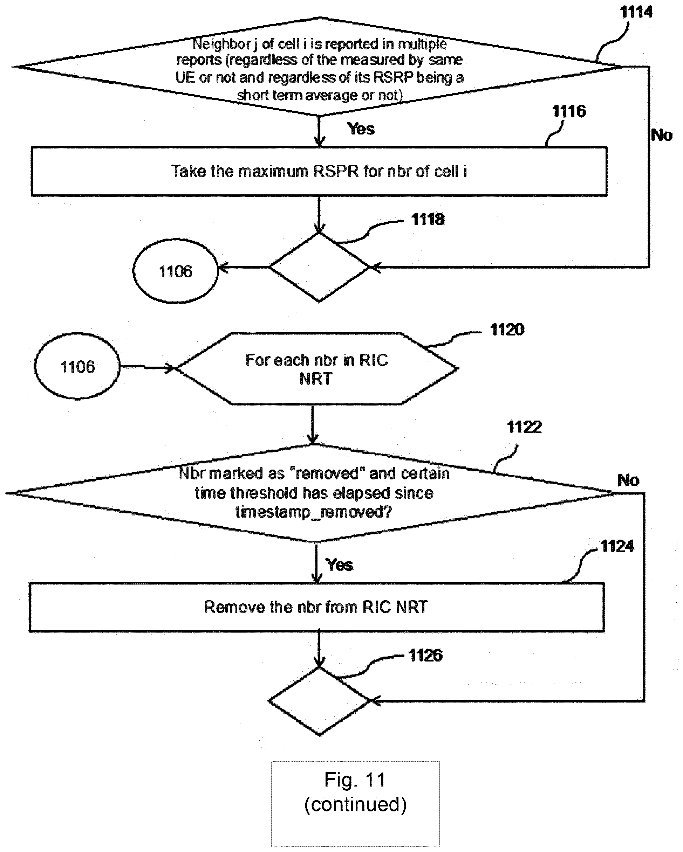

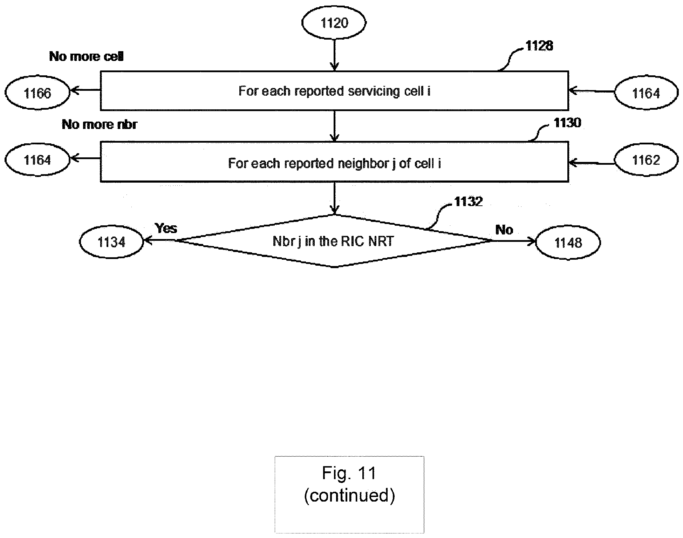

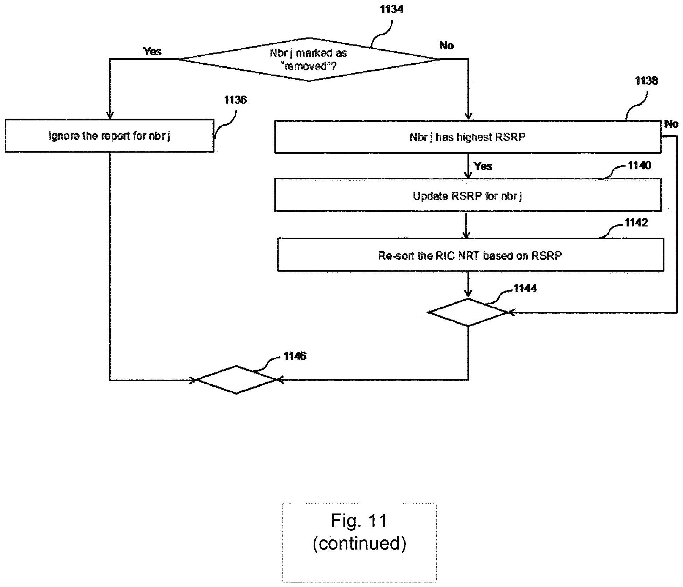

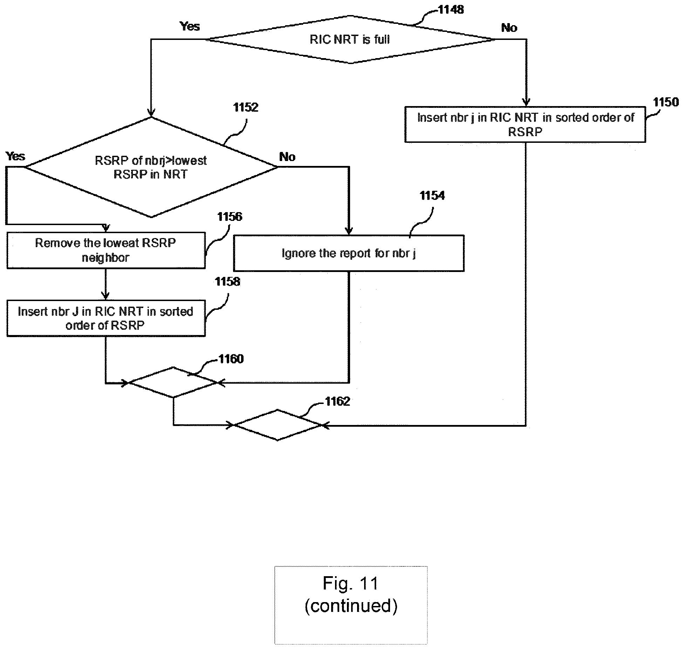

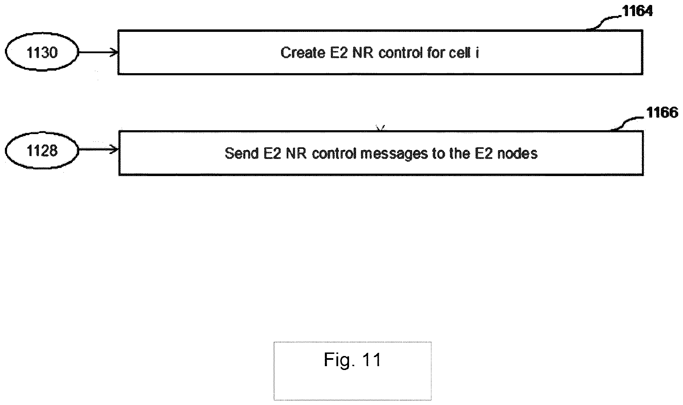

Fig. 11 is a flowchart (1100) illustrating a method implemented by the xApp 9406) for handling the hybrid automatic neighbor relations, E2 and ANR report handling in accordance with an embodiment of the present disclosure. Method 1100 starts at step 1102 and proceeds to steps 1104, 1106, 1108, 1110, 1112, 1114, 1116, 1118, 1120, 1122, 1124, 1126, 1128, 1130, 1132, 1134, 1136, 1138, 1140, 1142, 1144, 1146, 1148, 1150, 1152, 1154, 1156, 1158, 1160, 1162, 1164, 1166.

At step 1102, it is determined that the periodic timer has expired.

At step 1104, the HO measurement data since the last processing period is fetched.

At step 1106, the availability of ANR report(s) is determined.

In one embodiment, if it is determined that there is no more ANR report, then the method proceeds to step 1120.

In another embodiment, if it is determined that there is ANR report(s) available then, the method proceeds to step 1108.

At step 1108, it is determined whether neighbor j of the cell i has multiple RSRP measurements in a single event (e.g., A4 event or the like) measured by the UE (324) and determine that the event reporting interval <threshold average.

In one embodiment, if the neighbor j of the cell i has multiple RSRP measurements in the single event measured by the UE (324) and determines that the event reporting interval<threshold average then the method proceeds to step 1110.

In another embodiment, if the condition mentioned at step 1108 is not satisfied, then the method proceeds to step 1112.

At step 1110, the short term average of the RSRPs is computed and is forwarded to step 1112.

At step 1112, outputs of step 1108 and step 1110 are aggregated.

At step 1114, it is determined whether the neighbor j of cell i is reported in multiple reports (regardless of the measured by the same UE (324) or not and regardless of its RSRP being a short term average or not).

In one embodiment, if the neighbor j of cell i is reported in multiple reports (regardless of the measurement by the same UE (324) or not and regardless of its RSRP being a short term average or not) then the method proceeds to step 1116.

At step 1116, the maximum RSPR for nbr of cell i is taken and is proceeded to step 1118. If no, then the method proceeds to step 1118.

At step 1118, the outputs of step 1114 and step 1116 are aggregated.

At step 1122, each nbr in RIC NRT is checked whether the Nbr marked as "removed" and a certain time threshold has elapsed since timestamp_removed.

In one embodiment, if the Nbr marked as "removed" and a certain time threshold has elapsed since timestamp_removed then the method proceeds to step 1124.

At step 1124, the nbr from the RIC NRT is removed and proceeds to step 1126.

In one embodiment, if the nbr from the RIC NRT is not removed, the method proceeds to step 1126.

At step 1126, the outputs of step 1122 and step 1124 are aggregated.

At step 1128, availability of the cell(s) for each reported service (servicing) cell i is detected.

In one embodiment, if the method detects that no more cell is available then, the method proceeds to step 1166.

In another embodiment, if the cell(s) is available, then the method proceeds to step 1130.

At step 1130, check availability of nbr for each reported neighbor j of cell i is checked.

In one embodiment, if the nbr(s) is not available, then the method proceeds to step 1164.

In another embodiment, if the nbr is available, then the method proceeds to step 1132.

At step 1132, it is detected if the Nbr j is in the RIC NRT.

In one embodiment, if the Nbr j is in the RIC NRT then, the method proceeds to step 1134.

In another embodiment, if the Nbr j is not in the RIC NRT then the method proceeds to step 1148.

At step 1134, it is detected if Nbr j is marked as "removed".

In one embodiment, if the Nbr j is marked as "removed" then, the method proceeds to step 1136.

In another embodiment, if the Nbr j is marked as "not removed" then, the method proceeds to step 1138.

At step 1136, the report for nbr j is ignored.

At step 1138, it is determined if Nbr j has the highest RSRP.

In one embodiment, if the Nbr j has highest RSRP then, the method proceeds to step 1140.

In another embodiment, if the Nbr j does not have the highest RSRP, the method proceeds to step 1144.

At step 1140, the RSRP for nbr j is updated.

At step 1142, the RIC NRT based on RSRP is re-sorted. The method proceeds to step 1144.

At 1144, the outputs of step 1138 and step 1142 are aggregated.

At step 1146, the outputs of step 1144 and step 1136 are aggregated.

At step 1148, it is determined whether the RIC NRT is full.

In one embodiment, if the RIC NRT is not full then, the method proceeds to step 1150.

In another embodiment, if the RIC NRT is full then the method proceeds to step 1152.

At step 1150, the nbrj is inserted in the RIC NRT in a sorted order of RSRP.

At step 1152, it is determined whether the RSRP of nbrj>lowest RSRP in the NRT.

In one embodiment, if the RSRP of nbrj is greater than the lowest RSRP in the NRT then, the method proceeds to step 1156.

In another embodiment, if the RSRP of nbrj is less than the lowest RSRP in the NRT then, the method proceeds to step 1154.

At step 1154, the report for nbr j is ignored.

At step 1156, the lowest RSRP neighbor is removed.

At step 1158, nbr J is inserted in the RIC NRT in the sorted order of RSRP.

At step 1160, the outputs of step 1154 and step 1158 are aggregated.

At step 1162, the outputs of step 1160 and step 1150 are aggregated.

At step 1164, the E2 NR control for cell i is created.

At step 1166, the E2 NR control message is sent to the E2 node(s) (804).

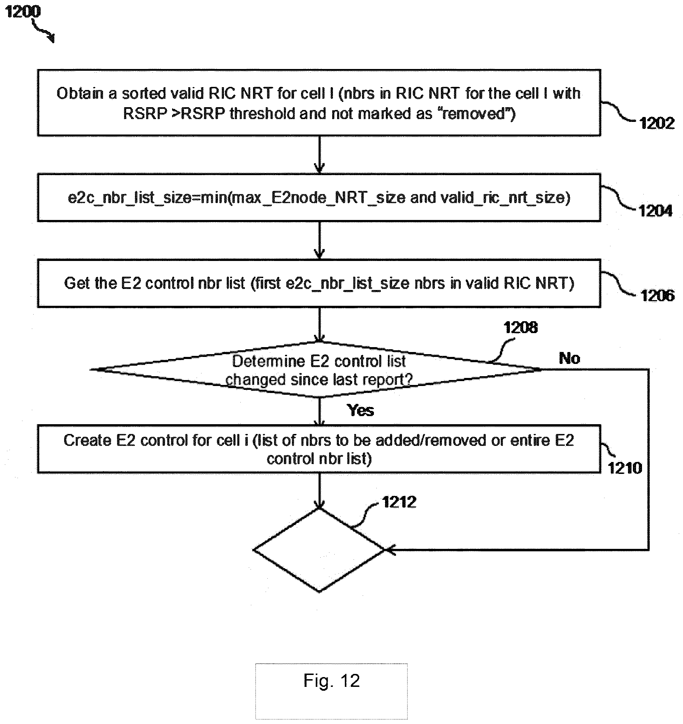

Fig. 12 is a flowchart (1200) illustrating a method for creating an E2 NR control in accordance with an embodiment of the present disclosure. Method 1200 starts at step 1202 and proceeds to steps 1204, 1206, 1208, 1210, 1212.

At step 1202, the sorted valid RIC NRT for cell i (i.e., nbrs in RIC NRT for the cell iwith RSRP >RSRP threshold and not marked as "removed") are obtained.

At step 1204, it is determined if e2c_nbr_list_size=min(max_E2node_NRT_size and valid_ric_nrt_size).

At step 1206, the E2 control nbr list (first e2c_nbr_list_size nbrs in the valid RIC NRT) is obtained.

At step 1208, it is determined whether the E2 control list has changed since last report.

In one embodiment, if the E2 control list is changed since the last report then, the method proceeds to step 1210.

In another embodiment, if the E2 control list is not changed since the last report then the method jumps to step 1212.

At step 1210, E2 control for cell i (list of nbrs to be added/removed or entire E2 control nbr list) is created and the method jumps to step 1212.

At step 1212, the outputs of step 1208 and step 1210 are aggregated.

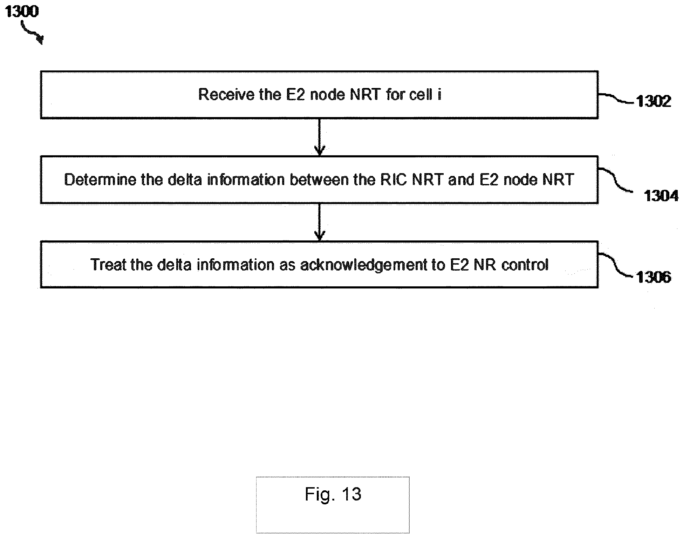

Fig. 13 is a flowchart (1300) illustrating a method implemented by the xApp (406) for handling an E2 node NRT in accordance with an embodiment of the present disclosure. Method 1300 starts at step 1302 and proceeds to step 1304, 1306.

At step 1302, the E2 node NRT for the cell i is received.

At step 1304, a delta information (i.e., differences) between the RIC NRT and E2 node NRT is determined.

At step 1306, the delta information is treated as acknowledgement to the E2 NR control.

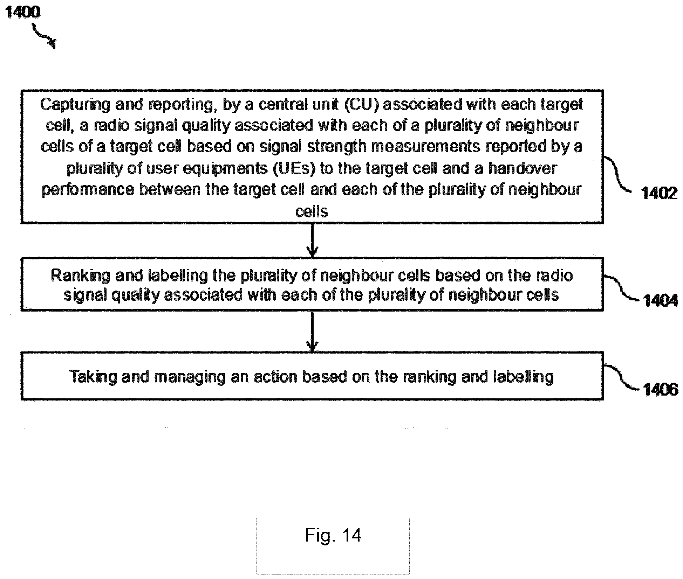

Fig. 14 is an exemplary flowchart (1400) illustrating a method for managing a table of a plurality of neighbor cells (354b, 354c, 354d) of each target cell in the RAN (300) in accordance with an embodiment of the present disclosure. As stated earlier, the target cell may be any of the plurality of neighbor cells (354b, 354c, 354d). For instance, if the cell (354b) acts as the target cell, then the neighbor cells will be 354c, 354d. Similarly, if the cell (354c) acts as the target cell, then the neighbor cells will be 354b, 354d and so on and so forth.

Method 1400 starts at step 1402 and proceeds to steps 1404, 1406.

At step 1402, the radio signal quality associated with each of the plurality of neighbor cells (354b, 354c, 354d) of the target cell is captured and reported by the central unit (CU) (512) associated with each target cell based on signal strength measurements reported by the plurality of user equipments (UEs) (324a1, 324a2, 324a3) to the target cell and the handover performance between the target cell and each of the plurality of neighbor cells (354b, 354c, 354d). Particularly, the handover performance may be defined by one or more of the number of attempted handovers between each of the plurality of neighbor cells and the target cell and the number of successful handovers between each of the plurality of neighbor cells and the target cell.

At step 1404, the plurality of neighbor cells (354b, 354c, 354d) are ranked and labeled based on the radio signal quality associated with each of the plurality of neighbor cells. In particular, ranking the plurality of neighbor cells (354b, 354c, 354d) may comprise assigning a rank to each of the plurality of neighbor cells based on calculation of the radio signal quality for each of the plurality of neighbor cells.

At step 1406, an action is taken and managed based on the ranking and labeling. Particularly, the action is associated with the plurality of neighbor cells (354b, 354c, 354d). Moreover, the managing action may comprise adding a cell to the plurality of neighbor cells when the cell is identified as a good neighbor. Furthermore, the good neighbor is determined based on at least one of the radio signal quality information, the radio signal quality threshold, priority of each of the plurality of neighbor cells. Alternatively, the managing action may comprise rearranging priorities of each of the plurality of neighbor cells (354b, 354c, 354d) based on the ranking. Alternatively, the managing action may comprise removing a cell from the plurality of neighbor cells when the cell is identified as a bad neighbor, wherein the bad neighbor is so labeled based on at least one of the handover performance information derived from attempted handovers, the handover failure information, the handover successful information, the attempted handovers threshold, the handover success ratio, the handover success ratio threshold, or the like.

Advantageously, the method may be used to implement the ANR function in the O-RAN architecture for supporting high interoperability in a disaggregated multi-vendor environment which follows O-RAN paradigms. The method may be used to implement policy-based features to reduce operational complexity. The method may also be used to manage the NRT constraint so that maximum neighbors are accommodated in the O-RAN architecture. Further, the method provides a highly dynamic HetNet(heterogeneous network) environment that demands very low latency and high quality neighbour relations with high scalability. Also, the proposed disclosure supports a high interoperability in a disaggregated multi-vendor environment and supports policy-based features to reduce operational complexity.

It may be noted that the flowcharts are explained to have above stated process steps; however, those skilled in the art would appreciate that the flowcharts may have more/less number of process steps which may enable all the above stated implementations of the present disclosure. The various actions, acts, blocks, steps, or the like in the flow chart and sequence diagrams may be performed in the order presented, in a different order or simultaneously. Further, in some implementations, some of the actions, acts, blocks, steps, or the like may be omitted, added, modified, skipped, or the like without departing from the scope of the present disclosure.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

The results of the disclosed methods may be stored in any type of computer data repository, such as relational databases and flat file systems that use volatile and/or non-volatile memory (e.g., magnetic disk storage, optical storage, EEPROM and/or solid state RAM)

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method of managing a plurality of neighbour cells (354b, 354c, 354d) of each target cell(354a) in a radio access network (300), **characterized in that** steps of:
capturing and reporting, by a central unit (CU) (512) associated with each target cell (354a), wherein a radio signal quality associated with each of the plurality of neighbour cells(354b, 354c, 354d) of a target cell based on signal strength measurements reported by a plurality of user equipment (UEs) (324a1, 324a2, 324a3) to the target cell;
ranking and labeling the plurality of neighbour cells (354b, 354c, 354d) based on the radio signal quality associated with each of the plurality of neighbour cells; and
taking and managing an action based on the ranking and labeling;
wherein the action is associated with the plurality of neighbour cells (354b, 354c, 354d).

2. The method as claimed in claim 1, wherein a handover performance is between the target cell and each of the plurality of neighbour cells(354b, 354c, 354d).

3. The method as claimed in claim 1 or 2, wherein the managing action comprises adding a cell to the plurality of neighbour cells when the cell is identified as a good neighbour.

4. The method as claimed in claim 3, wherein the good neighbour is determined based on at least one of a radio signal quality information, a radio signal quality threshold and priority of each of the plurality of neighbour cells.

5. The method as claimed in any preceding claim, wherein the managing action further comprises rearranging priorities of each of the plurality of neighbour cells (354b, 354c, 354d) based on the ranking.

6. The method as claimed in any preceding claim, wherein ranking the plurality of neighbour cells (354b, 354c, 354d) comprises assigning a rank to each of the plurality of neighbour cells based on a calculation of the radio signal quality for each of the plurality of neighbour cells.

7. The method as claimed in any preceding claim, wherein the managing action comprises removing a cell for handover consideration from the plurality of neighbour cells when the cell is identified as a bad neighbour.

8. The method as claimed in claim 7, wherein the bad neighbour is so labeled based on at least one of a handover performance information derived from attempted handovers, a handover failure information, a handover successful information, an attempted handovers threshold, a handover success ratio, and a handover success ratio threshold.

9. The method as claimed in any preceding claim, wherein the handover performance is defined by one or more of a number of attempted handovers between each of the plurality of neighbour cells and the target cell and a number of successful handover between each of the plurality of neighbour cells and the target cell.

10. A system (300) for managing a plurality of neighbour cells (354b, 354c, 354d) of each target cell characterized to:
capture radio signal quality measurements from a plurality of user equipment (UEs) (324a1, 324a2, 324a3) associated with a target cell, wherein the radio signal quality measurements are captured by a central unit (CU)(512) associated with the target cell, wherein the radio signal quality measurements are associated with each of the plurality of neighbour cells (354b, 354c, 354d);
report the radio signal quality measurements for all subscribed target cells to at least one xApp (406) in connection with a Near-Real-Time Radio Access Network Intelligent Controller (Near-RTRIC) (314) by the CU (512), wherein the CU (512) is in connection with the Near-RTRIC (314) over an E2 interface;
rank the plurality of neighbour cells by the at least one xApp (406) based on the radio signal quality measurements associated with each of the plurality of neighbour cells;
capture a handover performance from each target cell, wherein the handover performance is captured by the central unit (CU) (512) associated with the target cell, wherein the handover performance is associated with each of the plurality of neighbour cells(354b, 354c, 354d) of the target cell;
report the handover performance of all subscribed cells to at least one rApp(404) in connection with a Non-Real-Time Radio Access Network Intelligent Controller (Non-RTRIC) (402) within a Service Management and Orchestrator (SMO) (302)by the CU (512), wherein the CU (512) is in connection with the SMO (302) over an O1 interface;
create a policy and send the policy by the at least one rApp (404) to the at least one xApp (406) in connection with the Near-RTRIC (314) over an A1 interface; and
take and manage an action based on the ranking and the policy by the at least one xApp (406) in connection with the Near-RTRIC (314), wherein the manage action is associated with the plurality of neighbour cells (354b, 354c, 354d).

11. The system (300) as claimed in claim 10, wherein the manage action comprises adding a cell to the plurality of neighbour cells when the cell is identified as a good neighbour, wherein the good neighbour is determined based on at least one of a radio signal quality information, a radio signal quality threshold, priority of each of the plurality of neighbour cells.

12. The system (300) as claimed in claim 10 or 11, wherein the manage action comprises rearranging priorities of each of the plurality of neighbour cells (354b, 354c, 354d) based on the ranking.

13. The system (300) as claimed in any one of claims 10 to 12, wherein rank the plurality of neighbour cells (354b, 354c, 354d) comprising assigning a rank to each of the plurality of neighbour cells based on calculation of the radio signal quality for each of the plurality of neighbour cells.

14. The system (300) as claimed in any one of claims 10 to 13, wherein the manage action comprises removing a cell from the plurality of neighbour cells when the cell is identified as a bad neighbour, wherein the bad neighbour is so labeled based on at least one of a handover performance information derived from attempted handovers, a handover failure information, a handover successful information, an attempted handovers threshold, a handover success ratio, and a handover success ratio threshold.

15. The system (300) as claimed in any one of claims 10 to 14, wherein the handover performance is defined by one or more of a number of attempted handovers between each of the plurality of neighbour cells and the target cell and a number of successful handovers between each of the plurality of neighbour cells and the target cell.
